# EUROPEAN PATENT SPECIFICATION

(11) **EP 3 663 251 B1**
(45) Date of publication and mention of the grant of the patent: **23.08.2023**
(21) Application number: 19214288.3
(22) Date of filing: 06.12.2019
(51) Int. Cl.: B66C 13/48, G06Q 10/08, G06Q 50/28

(54) **A HOIST SYSTEM AND METHODS FOR OPERATING A HOIST LOCATED AT A WORK SITE**
HUBSYSTEM UND VERFAHREN ZUM BETRIEB EINES AN EINER ARBEITSSTELLE BEFINDLICHEN HEBEZUGS
SYSTÈME DE LEVAGE ET PROCÉDÉS DE FONCTIONNEMENT D'UN TREUIL SITUÉ SUR UN SITE DE TRAVAIL

(30) Priority: 07.12.2018 SE 1851531
(43) Date of publication of application: 10.06.2020
(73) Proprietor: Alimak Hek Group AB, 111 51 Stockholm (SE)
(72) Inventor: LUNDMARK, Jonny, 111 51 STOCKHOLM (SE); DAVIDOV, Tony, 111 51 STOCKHOLM (SE)
(74) Representative: Theander, Anna Katarina Henrietta

(56) References cited:
- WO-A1-2013/122997
- CN-U- 205 114 873
- KR-A- 20090 001 683
- US-A1- 2015 227 122

## Description

### TECHNICAL FIELD

The technology disclosed relates to methods and a hoist system for operating a hoist located at a work site, where the hoist system comprises at least one local area network located at the work site. The technology disclosed further relates to methods, a hoist system and a local area network configured for collecting data from at least one of a hoist located at the work site and event identification/communication generated at the work site and transmitting control data for changing the operation of at least one hoist located at the work site.

### BACKGROUND

Construction hoists for passengers and materials have been used for over 100 years in all types of applications. The range of the construction hoist may be adapted to offer the optimum transport solution for low rise, medium and high-rise constructions of all types. Typical applications include new build construction, refurbishment, chimney/slip form, offshore and bridge construction.

Transport platforms are suitable for the vertical transport of material on construction sites. These hoists offer additional functions and are a very efficient and safe alternative to conventional material hoists. The range is assembled with the same basic components such as mast, drive unit and platform decks. In some configurations, the hoist is specifically designed for smaller construction projects with limited space and where less payload capacity is required. Payload capacities may vary and be available in different configurations.

Other types of material hoist may be used for transporting material, e.g. palletized and large dimension panels, scaffolding, mini loaders, kitchens and other material, used on the inside and outside of the building. These larger transport platforms offer additional functions and are a very efficient and safe alternative for conventional material hoists. They can offer two hoisting and descending speeds. The different configurations are assembled with the same basic components such as mast, drive unit and platform decks.

A construction hoist is typically made up of either one or two cars, or cages, which travel vertically along stacked mast tower sections. Payload capacities typically may vary from 100 to 5,000 kg, available in different configurations. In many configurations, the mast sections may be attached to the structure or building every 5-10 meters for added stability. For precisely controlled travel along the mast sections, certain types of modern construction hoists often use a motorized rack-and-pinion system that climbs the mast sections at various speeds.

A rack-and-pinion is a type of linear actuator that comprises a pair of gears which convert rotational motion into linear motion. A circular gear called "the pinion" engages teeth on a linear "gear" bar called "the rack". Rotational motion applied to the pinion causes the rack to move relative to the pinion, thereby translating the rotational motion of the pinion into linear motion. The travel movements of a hoist car may typically be determined by the collecting and storing of call impulses from call button units and destination impulses from a control button set, and output and control means for controlling operation of the motor of the hoist as determined by received call and destination impulses. A rack and pinion hoist may further comprise sensor means associated with a lift car, where the sensor means is adapted for sensing passage of teeth of rack and pinion means is used for producing corresponding position impulses representative of the position of the lift car along a lift mast.

The rack and pinion hoist may further comprise a programmable microcomputer unit in the hoist car with means for receiving the position impulses, register means for position impulse numbers based upon the position impulses and representative of the positions of landings, means for collecting and storing call impulses from the call button units and destination impulses from the control button set, and output and control means for controlling operation of the motor of the hoist as determined by received call and destination impulses.

The solutions known in the art further includes hoist early warning systems for data real time monitoring, where the warning system comprises a controller including a hoist information acquisition module and a data processing module which is connected to the information acquisition module.

The solutions known in the art also includes elevator systems comprising a position determining device for determining the position of an elevator car within an elevator shaft and with respect to the running framework, which device comprises a marking unit for marking the position of the elevator car, and a detection unit for detecting or reading out the marking unit and an evaluation unit for evaluating measured values of the detection unit The marking unit is formed as a carrier of a barcode and the detection unit is formed as an image sensor.

KR 2009 0001683 relates to a hoist and method for managing vertical movement of materials/members using an intelligent hoist. The method disclosed comprises reading information of a material/member through an RFID reader installed in a hoist and storing information about the materials/members in an intelligent hoist controller. The read material/absence information is transmitted to the communication interface of a logistics management server which generates location information.

CN 205114873U relates to a system for collecting sensor data for real-time monitoring of a hoisting crane and to indicate a dangerrous condition by sending an alarm.

US 2015/227122 discloses a maintenance centre for automatically collecting diagnostics data relating to a component of a remote hoisting equipment.The hoists are provided with sensors for gathering diagnostics and operational environment data which is collected to an equipment- specific historian database. The maintenance centre may then, based on the diagnostics data, automatically generate a maintenance plan.

WO2013/122997 relates to a material handling system comprising a material lifting device having a sensor for sensing an operational parameter associated with the material lifting device.

### PROBLEMS WITH THE PRIOR ART

In a conventional hoist, e.g. a rack and pinion hoist, a drive lift is included with lift a cage or car, a lift mast and a driving electric motor. A rack may be carried by the lift mast, on which the lift car is movable. The hoist car typically contains a control and manoeuvre unit for the electric motor with a control or key board including destination or floor call buttons. The hoist may further comprise landing-based call button units which are connected to the control and manoeuvre unit via a ground level unit. The ground level may be a ground floor but can also be located on another level with respect to the lift mast Between the ground level unit and the lift car a power cable typically extends.

In a conventional hoist, the manoeuvre units and call units may together include a microcomputer system arranged to collect and store call impulses from the call units and destination impulses from the button set of the control and manoeuvre unit and, based upon the position of the lift car, to order driving direction, retardation and stop of the lift The stored calls and/or destinations are thereafter carried through in a selective and logical way, i.e. during travel upwards the call impulses for "up" shall be coordinated with the destination impulses so that the lift car travels from landing to landing and picks up and/or lets off passengers in a systematic way. When all calls and/or destinations for upwards travel have been carried through the direction of travel shall be changed to "down", where after call impulses for down are coordinated with destination impulses so that the lift starts/stops in a way corresponding to that which has been described above.

In today's hoists, the travel movements of a hoist car are typically determined by the collecting and storing of call impulses from call button units and destination impulses from a control button set, and output and control means for controlling operation of the motor of the hoist as determined by received call and destination impulses.

In an example related to rack and pinion hoist, sensor means associated with a lift car and having means for sensing passage of teeth of rack and pinion means may be used for producing corresponding position impulses representative of the position of the lift car along a lift mast. The hoist may further comprise a programmable microcomputer unit in the hoist car with means for receiving the position impulses, register means for position impulse numbers based upon the position impulses and representative of the positions of landings, means for collecting and storing call impulses from the call button units and destination impulses from the control button set, and output and control means for controlling operation of the motor of the hoist as determined by received call and destination impulses.

The solutions known in the art further includes hoist early warning systems for data real time monitoring, where the warning system comprises a controller including a hoist information acquisition module and a data processing module which is connected to the information acquisition module,

The solutions known in the art also includes elevator systems comprising a position determining device for determining the position of an elevator car within an elevator shaft and with respect to the running framework, which device comprises a marking unit for marking the position of the elevator car, and a detection unit for detecting or reading out the marking unit and an evaluation unit for evaluating measured values of the detection unit The marking unit is formed as a carrier of a barcode and the detection unit is formed as an image sensor.

### SUMMARY

The technology disclosed relates to methods and a hoist system for operating a hoist located at a work site, where the hoist system comprises at least one local area network located at the work site.

The technology disclosed may also relate to methods, a control system/computer unit and a hoist system for operating a plurality of hoists located at a work site, where the hoist system comprises at least one local area network, e.g. a local area communications network, located at the work site.

The technology disclosed further relates to methods, a hoist system, a control system/computer unit and a local area network, where the control system and/or the local area network comprises a computer unit configured for obtaining data from the work site, and where the at least one hoist is located at the work site.

According to certain embodiments of the technology disclosed, the flow of goods and material within the work site, e.g. building material at a construction site, is determined by a logistic process including certain events/tasks to be performed at the work site. In embodiments, the flow of goods, material and/or people within the work site is determined by the logistics process, e.g. a pre-determined logistics process, including a timeline with an order/sequence of events/tasks to be performed at the work site, where the timeline of the logistic process may also determine when in time certain events and/or tasks is to be performed at the work site.

In embodiments, the logistic process and the upcoming order and/or sequence of events to occur and/or tasks to be performed may be dynamically changed at least partly based on logistic event data obtained by a locally or a remotely located control system including at least one computer unit. The control system may then be part of a local area network at the work site or may be communicatively coupled to the local area network at the work site. The control system according to the technology disclosed may be further configured to dynamically change the order and/or sequence of events and/or tasks to be performed at the work site at least partly based on obtained logistics event data.

In embodiments, the logistics event data obtained by the control system may be triggered by logistics events such as the scanning of a barcode or the reading of at least one of an RFID tag, an NFC tag and a QR-code at the work site. The control system/computer unit according to the technology disclosed may then be adapted to generate control data at least partly based on received or retrieved logistics event data and may further be configured to transmit/send the control data to at least one hoist located at the work site. Logistics event data may herein refer to data transmitted with the purpose of indicating that a logistics event has occurred and/or that a logistics task has been initiated or completed. The transmission of the logistics event data may then be following or triggered by the reading or scanning of a tag or a barcode and may be an indicator of a current position or geographical area for certain goods/material and/or people. The transmitted logistics event data may also be indicating that a certain logistics event has occurred and/or that a certain logistics task has been initiated or completed, e.g. the transmission of logistics event data may be an indicator to the control system/computer unit/local area network that a certain logistics event of the logistics process has occurred and/or that a task of the logistics process has been initiated or completed.

In embodiments, the technology disclosed relates to a hoist system for operating at least one hoist located at a work site, wherein said hoist system comprises at least one local area network located at said work site, and wherein a control system of said at least one local area network, or which is communicatively coupled to said local area network, is configured to obtain logistics event data, and, at least partly based on said obtained logistics event data, transmit control data for changing operations of at least one hoist located at the work site.

In embodiments, the technology disclosed relates to a hoist system for operating at least one hoist located at a work site, wherein said hoist system comprises a control system configured to received logistics event data, and, at least partly based on said obtained logistics event data, transmit control data for controlling and/or changing operations of at least one hoist located at the work site, for example the movement or floor position of the at least one hoist, and wherein the transmission of logistics event data is triggered by event identification such as the scanning or reading of a barcode, an RFID tag, an NFC tag and a QR-code, Bluetooth communication at the work site, or any other means of identification of the position of goods, material and/or people, and/or the identification of the occurrence, initiation or completion of a logistics task or event at the work site, for example the logistics tasks and/or events as defined by a logistics process determining the order of logistics events and/or the timeline for the flow of goods, material and/or people within the work site.

In embodiments, the technology disclosed relates to a method for operating at least one hoist located at a work site, said method comprising receiving or retrieving, by a control system, logistics event data, and, at least partly based on said received/retrieved logistics event data, transmitting control data for controlling and/or changing operations of at least one hoist located at the work site, for example the movement or floor position of the at least one hoist, and wherein the transmission of logistics event data to the control system is triggered by event identification such as the scanning or reading of a barcode, an RFID tag, an NFC tag and a QR-code, Bluetooth communication at the work site, or any other means of identification of the position of goods, material and/or people, and/or the identification of the occurrence, initiation or completion of a logistics task or event at the work site, for example the logistics tasks and/or events as defined by a logistics process determining the order of logistics events and/or the timeline for the flow of goods, material and/or people within the work site.

In embodiments, the system and methods of the technology disclosed relates to the transmission of logistics event data to the control system where the transmission of logistics event data is triggered by event identification/communication occurred or conducted at a logistics event control unit, an information display unit, a mobile communications unit and/or a mobile or stationary barcode scanner or reader at the work site. The event identification/communication triggering the transmission of logistics event data to the control system, for example a computer unit of or communicatively coupled to the local area network, may include at least one of the scanning or reading of a barcode, an RFID tag, an NFC tag and a QR-code, Bluetooth communication at the work site, or any other means of identification of the position of goods, material and/or people, and/or the identification of the occurrence, initiation or completion of a logistics task or event at the work site, for example the logistics tasks and/or events as defined by a logistics process determining the order of logistics events and/or the timeline for the flow of goods, material and/or people within the work site.

In embodiments, the technology disclosed relates to a system for controlling or changing the operations of at least one hoist located at a work site, for example the movement operation or floor position for the at least one hoist, where the system comprises at least one controls system comprising a computer unit (e.g. a part of or communicatively coupled to the local area network) located at said work site. The at least one control system may then be configured to receive logistics event data, and, at least partly based on, or triggered by, said received logistics event data, transmit control data for controlling or changing the operations of at least one hoist located at the work site. The transmission of logistics event data, typically from a unit or terminal at the work site, to the control system is triggered by event identification including scanning or reading of a barcode, an RFID tag, an NFC tag and a QR-code, Bluetooth communication at the work site, or any other means of identification of the position of goods, material and/or people, and/or the identification of the occurrence, initiation or completion of a logistics task or event at the work site, for example the logistics tasks and/or events as defined by a logistics process determining the order of logistics events and/or the timeline for the flow of goods, material and/or people within the work site. The logistics event data may then be received by the control system, e.g. the local area network, by receiving a signal including logistics event data whose transmission is triggered by event identification, or event communication, occurred or conducted at the work site such as the scanning or reading of a tag or a code such as a barcode, or any other identification of the occurrence, initiation or completion of a logistics event

In embodiments, the technology disclosed relates to a method for controlling or changing the operations of at least one hoist located at a work site, e.g. the movement or floor position of the at least one hoist, comprising the steps of:
a. obtaining, at the control system, e.g. a local area network system, logistics event data associated with the logistics process and the flow of goods, material and/or people and the at least one hoist at the work site; and
b. transmitting, from the local area network system, control data for controlling or changing the operations of at least one hoist located at a work site, wherein said control data is at least partly based on the obtained logistics event data.

The control data transmitted by control system/computer unit may be adapted for changing the operations of the at least one hoist such as the movement operations or floor position of the at least one hoist in accordance with or to support the next step of the logistics process, or may be transmitted to reflect or support a change of the logistics process such as a change of the timeline and/or the order/sequence of events/tasks to be performed at the work site according to the logistics process. The control system/computer unit/local area network may also be configured to dynamically change the order and/or sequence of events and/or tasks of the logistic process at least partly based on obtained logistics event data, e.g. logistics event data received from a control unit/mobile communications unit at the work site by the control system/computer unit/local area network. In certain embodiments, the control system/computer unit/local area network may also be configured to dynamically change the order and/or sequence of events and/or tasks of the logistic process at least partly based on obtained logistics event data and at least partly based on obtained sensor data related to the operations and movements of at least one hoist at the work site.

In embodiments, the methods and hoist system of the technology disclosed may, in addition to obtaining logistic event data, be adapted to obtain sensor data from sensors of at least one hoist of the hoist system, where the sensor data is related to the movement operations of the at least one hoist at the work site. In certain embodiments, the obtained sensor data may be used by the control system for checking and/or verifying that the occurrence of events/tasks indicated by the obtained sensor data matches or corresponds to the current timeline and/or order of events/tasks of a logistic process, where the logistics process determines the flow of goods, material and/or people/workers at the work site, and where the logistic process may be dynamically changed by the control system based on logistics event data obtained by the control system/computer unit/local area network.

In embodiments, the logistic process may include a timeline of upcoming logistics events and tasks to be performed at the work site such as tasks related to the transportation of goods, material and/or people/workers to, from and/or within the area of the work site. In certain embodiments, the logistics process may also include a timeline of logistics events and tasks such as tasks related to the movement operations of the at least one hoist and/or the transportation of goods, material and/or people/workers to, from and/or within the area of the work site.

The technology disclosed relates to a hoist system for operating at least one hoist located at a work site, wherein said hoist system comprises at least one local area network located at said work site, and wherein a control system and/or computer unit of the hoist system is configured to obtain (receive and/or retrieve) logistics event data, and, at least partly based on said obtained logistics event data, transmit control data for changing operations of at least one hoist located at the work site.

In embodiments, the technology disclosed relates to a hoist system for operating at least one hoist located at a work site, wherein said hoist system comprises at least one local area network located at said work site, and wherein said at least one local area network is configured to obtain, receive and/or retrieve, logistics event data, and, at least partly based on said obtained logistics event data, transmit control data for changing operations of at least one hoist located at the work site.

In embodiments, the control system/computer unit of the hoist system may be configured to receive or retrieve sensor data which is used by the control system/computer unit, e.g. a computer unit of a local area network, to verify that a logistics event occurred and/or that a task of a logistics process has been initiated or completed. The control system/computer unit may be further configured to transmit control data for changing operations of at least one hoist located at the work site at least partly based on the obtained logistics event data when the logistics event or initiation or completion of a task of the logistics process is verified by the sensor data obtained by the control system/computer unit.

In embodiments, the technology disclosed relates to a hoist system for operating at least one hoist located at a work site, wherein the hoist system comprises at least one local area network located at said work site, and wherein the at least one local area network is configured to receive or retrieve both logistics event data and sensor data (e.g. obtained for verifying the obtained logistics event data), and, at least partly based on a combination of the received or retrieved logistics event data and sensor data and, transmit control data for changing operations of at least one hoist located at the work site.

In embodiments, the hoist system is configured for operating a plurality of hoists at said work site and a local area network of the hoist system is configured to receive logistics event data from the work site, and, at least partly based on the received logistics event data, transmit control data for changing operations of at least one hoist located at the work site, and wherein the control data is transmitted for changing at least one of the floor position and movement operations for a hoist car of at least one hoist located at the work site.

In embodiments, the hoist system is configured for operating a plurality of hoists at said work site and a local area network of the hoist system is configured to receive logistics event data transmitted from the area of the work site and sensor data from at least one hoist located at the work site, and, at least partly based on the received logistics event data and sensor data, transmit control data for changing operations of at least one hoist located at the work site, and wherein the control data is transmitted for changing at least one of the floor position and movement operations for a hoist car of at least one hoist located at the work site.

In embodiments, the hoist system is configured for operating a plurality of hoists at said work site and a local area network of the hoist system is configured to receive sensor data from a plurality of hoists at the work site, and, at least partly based on the received sensor data from the plurality of hoists, transmit control data for changing operations of at least one hoist located at the work site, and wherein the control data is transmitted for changing at least one of the floor position and movement operations for a hoist car of at least one hoist located at the work site.

In embodiments, the hoist system is configured for operating a plurality of hoists at said work site and said local area network is configured to receive sensor data from a plurality of hoists at said work site, and, at least partly based on said received sensor data from the plurality of hoists, transmit control data for changing operations for a plurality of hoists located at the work site.

In embodiments, the hoist system is configured for operating a plurality of hoists at said work site and said local area network is configured to receive both sensor data and logistics event data from a plurality of hoists at said work site, and, at least partly based on both the received sensor data from the plurality of hoists and said received logistics event data, transmit control data for changing operations for a plurality of hoists located at the work site.

In embodiments, the hoist system further comprises at least one sensor control unit and at least one local area communications network which is configured to wirelessly receive sensor data from a transmitter of said at least one sensor control unit. The sensor control unit may then be connected to and adapted for receiving sensor data from at least one sensor of at least one hoist, and the at least one sensor may include at least one of a temperature sensor, an accelerometer, a load cell or weight sensor for measuring the weight or payload of a hoist car, and an encoder configured for measuring at least one of distance and speed for a hoist car.

In embodiments, the hoist system comprises at least one of a barcode, an RFID tag, an NFC tag and a QR-code located at the work site, and the hoist system may be further configured so that the transmission of logistics event data from a transmitter of a logistics event control unit located at the work site is adapted to be triggered by at least one of the scanning of a barcode and reading of at least one of an RFID tag, an NFC tag and a QR-code at the work site.

In embodiments, the technology disclosed relates to a hoist system for operating at least one hoist located at a work site. The hoist system may then comprise at least one local area network located at said work site, and a control system or computer unit of said at least one local area network or which is communicatively coupled to said local area network is configured to obtain logistics event data, and, at least partly based on said obtained logistics event data, transmit control data for changing operations of at least one hoist located at the work site.

In embodiments, the hoist system is configured for operating a plurality of hoists at the work site and a control system (e.g. a computer unit of a local area network) may be configured to receive logistics event data from a control unit or mobile communications device at said work site, and, at least partly based on the obtained logistics event data, transmit control data for changing operations of at least one hoist located at the work site. The control data may then be transmitted with a purpose of changing at least one of the floor position and movement operations for a hoist car of at least one hoist located at the work site at least partly based on the obtained logistics event data. The change of floor position and movement operations for the hoist car instructed by the computer unit may then be supporting a logistics process defining or determining the flow of goods, material and/or people within the work site. In embodiments, the change of floor position and movement operations for the hoist car instructed by the control system may then be supporting a change of the timeline or order of events/tasks of a logistics process determining the flow of goods, material and/or people within the work site, where the change of the logistics process is introduced by the computer unit or control system at least partly based on logistics event data and/or sensor data obtained by the control system or computer unit

In embodiments, the hoist system is configured for operating a plurality of hoists at the work site and said computer unit or control system may also configured to receive sensor data from at least one hoist at said work site, and, at least partly based on said received sensor data and said obtained logistics event data, transmit control data for changing operations of at least one hoist located at the work site. The control data may then be transmitted with a purpose of changing at least one of the floor position and movement operations for a hoist car of at least one hoist located at the work site at least partly based on the received sensor data and the obtained logistics event data. The change of floor position and movement operations for the hoist car instructed by the computer unit may then be supporting a logistics process determining the flow of goods, material and/or people within the work site. In embodiments, the change of floor position and movement operations for the hoist car instructed by the computer unit may then be supporting a change of the timeline or order of events/tasks of a logistics process determining the flow of goods, material and/or people within the work site where the change of the logistics process is introduced by the computer unit or control system at least partly based on logistics event data and/or sensor data obtained by the control system or computer unit.

In embodiments, the hoist system is configured for operating a plurality of hoists at said work site and said local area network is configured to receive sensor data from a plurality of hoists at said work site, and, at least partly based on a combination of said obtained logistics event data and said received sensor data from the plurality of hoists, transmit control data for changing operations for a plurality of hoists located at the work site.

In embodiments, the hoist system is configured for operating a plurality of hoists at said work site and said local area network is configured to receive both sensor data and logistics event data from a plurality of hoists at said work site, and, at least partly based on both said received sensor data from the plurality of hoists and said received logistics event data, transmit control data for changing operations for a plurality of hoists located at the work site.

In embodiments, the hoist system further comprises at least one sensor or detector and said at least one local area network is configured to wirelessly receive sensor data from a transmitter of said at least one sensor control unit. The sensor control unit may then be connected to and adapted for receiving sensor data from at least one sensor or detector of at least one hoist, and the at least one sensor or detector include at least one of a temperature sensor, an accelerometer, a load cell or weight sensor for measuring the weight or payload of a hoist car, and an encoder configured for measuring at least one of distance and speed for a hoist car.

In embodiments, the hoist system comprises at least one of a barcode, an RFID tag, an NFC tag and a QR-code located at the work site, and wherein the hoist system is further configured so that the transmission of logistics event data from a mobile communications device or transmitter of a logistics event control unit located at the work site is adapted to be triggered by at least one of the scanning of a barcode and reading of at least one of an RFID tag, an NFC tag and a QR-code at the work site.

In embodiments, the logistics event data is transmitted following the reading or scanning of a tag or barcode with the purpose of indicating to the control system that a logistics event of a logistics process has occurred or that a task of the logistics process has been initiated or completed, where the logistics process determines or defines the flow of goods, material and/or people within the work site.

In embodiments, the control system or local area network is configured to change at least one of the timeline and/or order of events or tasks of a logistics process determining or defining the flow of goods, material and/or people within the work site, and wherein said change to the logistics process is at least partly based on logistics event data and/or sensor data obtained by the control system.

In embodiments, the local area network system of the technology disclosed is comprising a control system comprising a computer unit configured to at least one of:
a. perform data processing for improving and/or optimizing the combined operations of a plurality of hoists at the work site at least partly based on the obtained logistics event data,
b. perform data processing for improving and/or optimizing the combined operations of a plurality of hoists at the work site at least partly based on knowledge about at least one of the different capacities and performances of a plurality of hoists at the work site, and
c. perform data processing for improving and/or optimizing the combined operations of a plurality of hoists at the work site at least partly based on the obtained logistics event data,
wherein the local area network system is further configured to transmit control data for changing the movement operations of at least one hoist among the plurality of hoists based on at least one of the obtained logistics event data and said data processing.

The technology disclosed further relates to a method for controlling and monitoring operations of at least one hoist at a worksite, said method comprising:
a. obtaining, at a control system or computer unit communicatively coupled to the local area network system located at a work site, data including logistics event data associated with the at least one hoist at the work site; and
b. transmitting, from the control system or computer unit, control data for changing operations of at least one hoist at the work site, wherein said control data is at least partly based on the obtained logistics event data.

In embodiments, the control data is transmitted for changing at least one of floor position and movement operations for a hoist car of at least one hoist at the work site.

In embodiments, the step of obtaining further comprises obtaining sensor data, and wherein said logistics event data and sensor data includes at least one of wirelessly receiving sensor data from a sensor or detector of a hoist and wirelessly receiving logistics event data related to logistics events from a logistics event control unit or a mobile communications device located at the work site.

In embodiments, the logistics event data is transmitted from a logistics event control unit, a barcode scanner and/or a mobile communications device located at the work site, and wherein said transmission is triggered by at least one of the scanning of a barcode and reading of at least one of an RFID tag, an NFC tag and a QR-code at the work site.

In embodiments, the control system or computer unit is performing the step of changing at least one of the timeline and/or order of events or tasks of a logistics process determining or defining the flow of goods, material and/or people within the work site, and wherein said change to the logistics process is at least partly based on logistics event data and/or sensor data obtained by the control system or computer unit.

In embodiments, the method of the technology disclosed further comprises:
optimizing, by said control system or computer unit, the combined operations of a plurality of hoists at the work site at least partly based on the obtained at least one of sensor data and logistics event data,
generating control data at least partly based on said optimizing of the combined operations and the obtained logistics event data, and
transmitting said control data for changing operations of at least one hoist among the plurality of hoist at least partly based on said optimization of the combined operations of the plurality of hoists.

In embodiments, the hoist system may further comprises a control and monitoring system which is remotely located in relation to said work site and communicatively coupled to said at least one local area network, and wherein said remote control and monitoring system is configured to at least one of receive and retrieve data and/or information from said at least one local area network system based on at least one of said received at least one of sensor data and logistics event data and/or knowledge or information about at least one of the different capacities and performances of a plurality of hoists at the work site, at least partly based on said received or retrieved data and/or knowledge/information, transmit instruction data to said wireless communications network with instructions for changing at least one of the floor position and movement operations of a hoist car of at least one of the at least one hoist at the work site.

In embodiments, the technology disclosed relates to a local area network system for changing and/or controlling the operations of a plurality of hoists at a work site, wherein said local area network system is configured to obtain logistics event data from the work site, and, at least partly based on received logistics event data, transmit control data for changing the operations of at least one hoist at the work site such as the floor position for the at least one hoist

In embodiments, the local area network system is configured to transmit said control data in a signal to at least one hoist for changing the floor position and/or movement operations for a hoist car of at least one hoist at the work site, and wherein said local area network is configured to wirelessly receive logistics event data from the work site and transmit said control data either wirelessly or by wireline. In certain embodiments, the local area network system is further configured to receive logistics event data from a mobile communications device located outside said work site and receive and/or retrieve logistics event data from an internal or external logistics management system and, at least partly based on said received and/or retrieved logistics event data, transmit a control signal comprising control data for changing the location and/or movement operations of a hoist car of at least one of the at least one hoist at the work site.

In embodiments, the control system and/or local area network system is further comprising a computer unit configured to at least one of:
a. perform data processing for improving and/or optimizing the combined operations of a plurality of hoists at the work site at least partly based on the obtained logistics event data,
b. perform data processing for improving and/or optimizing the combined operations of a plurality of hoists at the work site at least partly based on knowledge about the obtained logistics event data and at least one of the different capacities and performances of a plurality of hoists at the work site, and
c. perform data processing for improving and/or optimizing the combined operations of a plurality of hoists at the work site at least partly based on the obtained logistics event data and at least one of the different capacities and performances of a plurality of hoists at the work site,
wherein the control system and/or local area network system is further configured to transmit control data for changing the operations of at least one hoist based on the performed data processing according to at least one of the above steps a, b and c.

In embodiments, the control system and/or local area network system is further comprising a computer unit configured to at least one of:
a. perform data processing for improving and/or optimizing the combined operations of a plurality of hoists at the work site at least partly based on the obtained logistics event data and sensor data received from at least one hoist at the work site,
b. perform data processing for improving and/or optimizing the combined operations of a plurality of hoists at the work site at least partly based on knowledge about the obtained logistics event data and sensor data received from at least one hoist at the work site and/or at least one of the different capacities and performances of a plurality of hoists at the work site, and
c. perform data processing for improving and/or optimizing the combined operations of a plurality of hoists at the work site at least partly based on the obtained logistics event data and at least one of the different capacities and performances of a plurality of hoists at the work site,
wherein the control system and/or local area network system is further configured to transmit control data for changing the operations of at least one hoist based on the performed data processing according to at least one of the above steps a, b and c.

In embodiments, the control system and/or local area network system is further comprising a computer unit configured to at least one of:
a. perform data processing for improving and/or optimizing the combined operations of a plurality of hoists at the work site at least partly based on the obtained logistics event data and sensor data received from at least one hoist at the work site,
b. perform data processing for improving and/or optimizing the combined operations of a plurality of hoists at the work site at least partly based on knowledge about the obtained logistics event data and sensor data received from at least one hoist at the work site and/or at least one of the different capacities and performances of a plurality of hoists at the work site, and
c. perform data processing for improving and/or optimizing the combined operations of a plurality of hoists at the work site at least partly based on the obtained logistics event data and at least one of the different capacities and performances of a plurality of hoists at the work site,
wherein the control system and/or local area network system is further configured to transmit control data for changing the operations of a plurality of hoists based on the performed data processing according to at least one of the above steps a, b and c.

In embodiments, the local area network system is further comprising a computer unit configured to at least one of:
a. perform data processing for improving and/or optimizing the combined operations of a plurality of hoists at the work site at least partly based on the received logistics event data,
b. perform data processing for improving and/or optimizing the combined operations of a plurality of hoists at the work site at least partly based on knowledge about at least one of the different capacities and performances of a plurality of hoists at the work site, and
c. perform data processing for improving and/or optimizing the combined operations of a plurality of hoists at the work site at least partly based on instruction data received or retrieved from a remote control and monitoring system,
wherein the local area network system is further configured to transmit control data for changing the operations of a plurality of hoists based on the performed data processing according to at least one of the above steps a, b and c.

In embodiments, the technology disclosed relates to a local area network system for changing and/or controlling the operations of a plurality of hoists at a work site, wherein said local area network system is configured to receive at least one of sensor data and logistics event data from the work site, and, at least partly based on received sensor data and/or logistics event data, transmit control data for changing the operations of at least one hoist at the work site.

In embodiments, the local area network system is configured to transmit said control data in a signal to at least one hoist for changing the floor position and/or movement operations for a hoist car of at least one hoist at the work site, and wherein said local area network is configured to wirelessly receive at least one of sensor data and logistics event data from the work site and transmit said control data either wirelessly or by wireline. In certain embodiments, the local area network system is further configured to at least one of receiving logistics event data from a mobile communications device located outside said work site and receive and/or retrieve logistics event data from an internal or external logistics management system and, at least partly based on said received and/or retrieved at least one of sensor data and logistics event data, transmit a control signal comprising control data for changing the location and/or movement operations of a hoist car of at least one of the at least one hoist at the work site.

In embodiments, the local area network system is further comprising a computer unit configured to at least one of
a. perform data processing for improving and/or optimizing the combined operations of a plurality of hoists at the work site at least partly based on the received at least one of sensor data and logistics event data,
b. perform data processing for improving and/or optimizing the combined operations of a plurality of hoists at the work site at least partly based on knowledge about at least one of the different capacities and performances of a plurality of hoists at the work site, and
c. perform data processing for improving and/or optimizing the combined operations of a plurality of hoists at the work site at least partly based on instruction data received or retrieved from a remote control and monitoring system,
wherein the local area network system is further configured to transmit control data for changing the operations of a plurality of hoists based on the performed data processing according to at least one of the above steps a, b and c.

The technology disclosed further relates to a method for controlling and monitoring operations of at least one hoist at a worksite, said method comprising:
a. obtaining logistics event data associated with the logistics process determining the flow of goods, material and/or people at a work site comprising at least one hoist; and
b. transmitting, from a control system or computer unit of a hoist system comprising a local area network system, control data for changing operations of at least one hoist at the work site, wherein said control data is at least partly based on the received logistics event data.

In embodiments, the control data is transmitted in accordance with the above method is transmitted for changing at least one of floor position and movement operations for a hoist car of at least one hoist at the work site.

In embodiments, the step of obtaining the logistics event data includes at least one of wirelessly receiving sensor data from a sensor control unit of a hoist and wirelessly receiving logistics event data related to logistics events from a logistics event control unit located at the work site.

In embodiments, the logistics event is triggered by an occurred event or task initiated or completed at the work site including at least one of the scanning of a barcode and reading of at least one of an RFID tag, an NFC tag and a QR-code at the work site. The scanning of a barcode may then be performed by a barcode scanner and the reading, e.g. automatic reading, of at least one of an RFID tag, an NFC tag and a QR-code may be performed by a mobile communications device present at the work site, e.g. the mobile communications device of a worker at the work site.

In embodiments, the logistics event is triggered by an occurred event or task initiated or completed at a logistics event control unit at the work site including at least one of the scanning of a barcode and reading of at least one of an RFID tag, an NFC tag and a QR-code at the work site.

In embodiments, the step of obtaining includes at least one of retrieving logistics event data from a logistics management system and receiving logistics event data from a mobile communications device located outside said work site.

In embodiments, the method according to the technology disclosed further comprises optimizing, by the computer unit of the local area network, the combined operations of a plurality of hoists at the work site based on the wirelessly received at least one of sensor data and logistics event data, generating control data based on said optimizing of the combined operations, and transmitting said control data for changing operations of the plurality of hoist at the work site in accordance with said optimization of the combined operations of the plurality of hoists.

In embodiments, the transmission of control data for changing operations of the plurality of hoist comprise sending control data for changing at least one of the floor position and movement operations for respective at least one hoist car of the plurality of hoists.

In embodiments, the method further comprises the following steps conducted prior to the step of transmitting control data:
transmitting, from the local area network system to a control and monitoring system remotely located from the work site, at least one of data and
information at least partly based on the obtained at least one of sensor data and logistics event data;
optimizing, at the remote control and monitoring system, the operations of a plurality of hoists at the work site based on the received data or information; and
receiving, from the remote control and monitoring system, instruction data based on said optimization performed at the remote control and monitoring system, wherein said instruction data is used by the local area network system in generating said control data to be transmitted.

In embodiments, the method further comprises the following steps conducted prior to the step of transmitting control data:
transmitting, from at least one of at least one hoist and at least one mobile communications device located at said work site and to a control and monitoring system remotely located from the work site, at least one of sensor data and
logistics event data obtained at said work site, wherein said at least one of sensor data and logistics event data is transmitted directly to the remotely located control and monitoring system via an external radio-based network and/or the internet and not via the local area communications network;
optimizing, at the remote control and monitoring system, the operations of the plurality of hoists at the work site based on the received data or information; and
receiving, at the local area communications network, instruction data from the remote control and monitoring system, wherein said instruction data is based on said optimization at the remote control and monitoring system, and wherein said instruction data is used by the local area communications network in the preparation of said control data.

In embodiments, the technology disclosed also relates to a method for changing the timeline and/or the order of events of a logistics process, i.e. the sequence or order of events to occur or tasks to be performed at a work site, where the logistics process include tasks related to the transportation of goods and material within the area of the work site. The method may then comprise at least some of the following steps conducted prior to the step of transmitting control data:
transmitting, from at least one hoist and/or a logistics event communication point of the work site to the local area network such as a control system or computer unit of the local area network system at the work site, logistics event data;
determining and/or optimizing, by the control system/computer unit and at least partly based on the logistics event data, the occurrence order of upcoming events and tasks to be performed by the workers at the work site and/or movement operations and positioning of at least one hoist car at the work site; and
receiving, by the at least one hoist or a computer control system of the local area network system and from the computer control system of the local area network system, control/instruction data based on the determination and/or optimization of the timeline and/or the order of events of the logistic process flow, wherein the determination and/or optimization is performed by the computer control system of the local area network system. In some embodiments, the instruction data may then be used by the local area network system in the generating of the control data to be transmitted to the at least one hoist for changing the operations of the hoist some embodiments, the be adapted to receive sensor data, received or retrieved from sensors of at least one hoist of the hoist system, for checking or verifying that the occurrence order of events indicated by the received logistics event data matches or corresponds to the current order of events of a logistic process flow.

In embodiments, the technology disclosed also relates to methods for optimizing and/or changing the timeline and/or the order of events of a logistic process flow of tasks to be performed at a work site, where the logistics process includes tasks related to the operations of at least one hoist and the transportation of goods and building material within the area of the work site. In these embodiments, the method may then comprise at least some of the following steps conducted prior to the step of transmitting control data:
transmitting, from at least one hoist or a control system of the local area network system at the work site, to a control and monitoring system remotely located from the work site, at least one of data and information at least partly based on obtained logistics event data;
determining and/or optimizing, by the remote control and monitoring system, the order of upcoming tasks to be performed by the workers at the work site and/or movement operations and positioning of at least one hoist car at the work site based on received data or information; and
receiving, by the at least one hoist or a control system of the local area network system and from the remote control and monitoring system, instruction data based on the determination and/or optimization of the timeline and/or the order of events of a logistic process flow, where the determination and/or optimization is performed by the remote control and monitoring system. In embodiments, the instruction data may be used by the local area network system in the generating of the control data to be transmitted to the at least one hoist for changing the operations of the hoist.

In embodiments, the collected data may be at least one of sensor data received or retrieved from the hoists and event data related to, or triggered by, logistics events and the methods and hoist system may be adapted to generate control data at least partly based on received sensor data and/or logistics event data and transmit the control data for changing the operation of at least one hoist located at the work site. The sensor data may be received by receiving a signal including sensor data obtained by a sensor, or sensor device, where the signal is transmitted by the sensor, or sensor device.

In embodiments, the generated and transmitted control data may be at least partly based on some pre-known knowledge about at least one of the capacity and performance of the at least one hoist, an upcoming event and/or task at the work site and/or the operation of at least one other hoist at the work site.

The technology disclosed relates to methods and a hoist system for operating a hoist located at a work site, where the hoist system comprises at least one local area network located at the work site. In embodiments, the technology disclosed further relates to methods, a hoist system and a local area network configured for collecting event data related to logistics events from the work site and sensor data from a plurality of hoists located at the work site. The collected data may be sensor data from a plurality of hoists and event data related to logistics events and the methods and hoist system may be adapted to generate control data at least partly based on at least one of received or retrieved sensor data from a plurality of hoists and logistics event data and transmit the control data for changing the operation of at least one hoist located at the work site. In embodiments, the control data for changing the operation of at least one hoist includes control data for changing at least one of the floor position and movement operations of a hoist car of at least one hoist among a plurality of hoists at the work site. In certain embodiments, the generated and transmitted control data may in addition be at least partly based on some pre-known knowledge about at least one of an upcoming event and/or task at the work site and/or the operation of at least one other hoist at the work site.

In certain embodiments, the generated and transmitted control data for changing the operations of a first hoist among a plurality of hoists at a work site is at least partly based on first sensor data from the first hoist and second sensor data received or retrieved from a second hoist among the plurality of hoists located at the work site. The sensor data may be received by receiving a signal including sensor data obtained by a sensor, or sensor device, where the signal is transmitted by the sensor, or sensor device. In embodiments, the control data for changing the operation of the first hoist includes control data for changing at least one of the floor position and movement operations of a hoist car of the first hoist In certain embodiments, the generated and transmitted control data may in addition be at least partly based on some pre-known knowledge about at least one of an upcoming event and/or task at the work site and/or the operations of both the first and second hoist at the work site.

In embodiments, the technology disclosed relates to a hoist system configured for transmitting logistics event data from the transmitter of a logistics event control unit to the local area network, where the transmission of the logistics event data is triggered by event identification, or event communication, including at least one of the scanning of a barcode and the reading of at least one of an RFID tag, an NFC tag and a QR-code at the work site, or any other means of identification of the position of goods, material and/or people, and/or the identification of the occurrence, initiation or completion of a logistics task or event at the work site. The event identification/communication may also include indications, or data related to logistics events, which is received or retrieved from at least one proximity sensor. The logistics event data may be provided to the computer unit of the local area network by transmitting, from the logistics event control unit, a signal including logistics event data obtained by the logistics event control unit through event identification/communication, where the signal comprising the logistics event data is transmitted by the logistics event control unit to the access point of the local area network and thereby the computer unit of the local area network is provided with logistics event data.

The technology disclosed further relates to methods and a hoist system comprising a local area network system configured for receiving at least one of sensor data and event data related to logistics events and, at least partly based on the received sensor data and/or logistics event data, transmitting control data for changing the operation of at least one hoist located at the work site.

The technology disclosed also relates to a local area network system for controlling the operations of a plurality of hoists at a work site, where the local area network system is configured to receive both sensor data and logistics event data from the work site, and, at least partly based on received sensor data and/or logistics event data, transmit control data for changing the operation of at least one hoist at the work site. In embodiments, the control data may in addition be at least partly based on the hoist system's pre-known knowledge about at least one of an upcoming event and/or task at the work site, or by the hoist system received or retrieved data about the operations of at least one other hoist at the work site, e.g. the knowledge about at least one of past and predicted movement operations for at least one other hoist at the work site.

In certain embodiments, the generated and transmitted control data for changing the operations of a first hoist among a plurality of hoists at a work site is at least partly based on both first sensor data from the first hoist and second sensor data received or retrieved from a second hoist among the plurality of hoists located at the work site, where the control data is further at least partly based on event data related to logistics events which is received from a logistics event control unit. The logistics event control unit located at the work site may then be configured to transmit data related to a logistics event to the local area network, where the transmission of logistics event data is triggered by event identification, or event communication, and the event identification/communication may include at least one of the scanning of a barcode and the reading of at least one of an RFID tag, an NFC tag and a QR-code at the work site, or any other identification of the position of goods, material and/or people, and/or the identification of the occurrence, initiation or completion of a logistics task or event at the work site. The event identification/communication may also include indications, or data related to logistics events, which is received from proximity sensors. The logistics event data may be provided to the computer unit of the local area network by transmitting, from the logistics event control unit, a signal including logistics event data obtained by the logistics event control unit through event identification/communication, where the signal comprising the logistics event data is transmitted by the logistics event control unit to the access point of the local area network and thereby the computer unit of the local area network is provided with logistics event data.

In certain embodiments, the generated and transmitted control data for changing the operations of at least a first hoist among a plurality of hoists at a work site is at least partly based on at least one of first sensor data from the first hoist and second sensor data received or retrieved from a second hoist among the plurality of hoists located at the work site, where the control data is further at least partly based on both event data related to logistics events which is received from a logistics event control unit and some pre-known knowledge about at least one of an upcoming event and/or task at the work site. The logistics event control unit located at the work site may then be configured to transmit data related to logistics events to the local area network, where the transmission of logistics event data is triggered by event identification, or event communication, and the event identification/communication may include at least one of the scanning of a barcode and the reading of at least one of an RFID tag, an NFC tag and a QR-code at the work site, or any other identification of the position of goods, material and/or people, and/or the identification of the occurrence, initiation or completion of a logistics task or event at the work site. The event identification/communication may also include indications, or data related to logistics events, which is obtained through Bluetooth communication or obtained/received from proximity sensors.

In embodiments, the local area network system is a wireless local area network, e.g. a wireless local area communications network, comprising a wireless access point and at least one of a computer unit and a database. The local area network system may then be configured to wirelessly receive at least one of sensor data from at least one hoist and logistics event data and to wirelessly or by wireline transmit control data for changing the operation of at least one hoist at the work site based at least partly on at least one of the received sensor data and the received logistics event data.

In embodiments, the local area network system is a wireless local area network, e.g. a wireless local area communications network, comprising a wireless access point and at least one of a computer unit and a database. The local area network system may then be configured to wirelessly receive both sensor data and logistics event data and to wirelessly or by wireline transmit control data for changing the operation of at least one hoist at the work site at least partly based both on the received sensor data and the received logistics event data.

In embodiments, the local area network system is configured to wirelessly receive both sensor data and logistics event data and to wirelessly or by wireline transmit said control data based both on the received sensor data and the received logistics event data.

In embodiments, the hoist system at the work site is configured so that the hoist communicates with logistic software at the work site area, e.g. the logistics software of a computer unit which is connected to the access point of the local area network. The control data for changing the operation of at least one hoist at the work site may then be based on instruction data received from the computer unit of the local area network, but is generated and transmitted by the control unit of the hoist which operation is to be changed or alternatively, generated by a common control unit which is configured to send control data to a plurality of hoists at the work site, e.g. a building or construction site.

In embodiments, the technology disclosed further relates to a local area network system comprising a computer unit configured to at least one of
a. perform data processing for improving and/or optimizing the combined operations of a plurality of hoists at the work site at least partly based on the received at least one of sensor data and logistics event data,
b. perform data processing for improving and/or optimizing the combined operations of a plurality of hoists at the work site at least partly based on knowledge about at least one of the different capacities and performances of a plurality of hoists at the work site, and
c. perform data processing for improving and/or optimizing the combined operations of a plurality of hoists at the work site at least partly based on instruction data received or retrieved from a remote control and monitoring system,
where the local area network system is further configured to transmit control data for changing the operations of a plurality of hoists based on the performed data processing according to at least one of the above steps a, b and c.

In certain embodiments, the local area network comprises a wireless access point/node and at least one of a computer unit and a database. The local area network may then be configured to transmit control data for changing at least one of the floor position and movement operations of a hoist car of at least one hoist among said plurality of hoists located at the work site. The transmitted control data may then be at least partly based on at least one of sensor data and event data related to logistics events where the sensor data and/or logistics data is wirelessly received by the wireless access point/node of the local area communications network,

The local area network may further comprise a computer unit configured to receive sensor data and/or logistics event data from the wireless access point/node. In embodiments, the computer unit is configured to perform at least one of processing, computations and optimization analyses of the received sensor data and/or logistics event data. Additionally, the computer unit may be configured to generate control data for changing the operation of a hoist, where the generating of the control data is at least partly based on the processing, computations and optimization analyses of the received sensor data and/or logistics event data. In embodiments, the computer unit may be configured to send instruction data which is transmitted to the sensor control unit of at least one hoist with the purpose of changing the operation of the at least one hoist such as at least one of the floor position and movement operations of a hoist car of the at least one hoist.

The local area network may further comprise a local database configured for storing the sensor data and/or logistics event data wirelessly received by the wireless access point/node or the computer unit of the local area network. In embodiments, the local database may be configured to store information related to, or associated with, the received sensor data and/or logistics event data. In certain embodiments, the sensor data and/or logistics event data stored in the local database, or stored information related to, or associated with, the received sensor data and/or logistics event data, may be retrievable by the computer unit and may then be used in the generating of the control data to be transmitted for changing the operation of at least one hoist.

In embodiments, the technology disclosed relates to methods and a hoist system for transmitting logistics event data from the transmitter of a logistics event control unit to the local area network, where the transmission of the logistics event data is triggered by event identification, or event communication. This event identification/communication may then include at least one of the scanning of a barcode and reading at least one of an RFID tag, an NFC tag and a QR-code at the work site, or any other means of identification of the position of goods, material and/or people, and/or the identification of the occurrence, initiation or completion of a logistics task or event at the work site. The event identification/communication may also include indications, or data related to logistics events, which is obtained through Bluetooth communication, or received or retrieved from at least one proximity sensor, e.g. by a logistics event control unit at the work site.

In embodiments, the local area network may be connected to an external database configured for storing the sensor data and/or logistics event data wirelessly received by the wireless access point/node and/or the computer unit of the local area network. In embodiments, the external database may also be configured to store information related to, or associated with, the received sensor data and/or logistics event data. By "external database", it is meant in this disclosure that the external database is not located at the work site, whereas the local area network is located at the work site, e.g. a building or construction site. In certain embodiments, the external database may be part of an Enterprise Resource Planning (ERP) system. The ERP may then provide an integrated and continuously updated view of the event identification/communication and logistics events that occur at the work site by using e.g. common databases maintained by a database management system.

In certain embodiments, the sensor data and/or logistics event data stored in the external database, or stored information related to, or associated with, the received sensor data and/or logistics event data, may be retrievable by the computer unit and may also be used in the process of generating the control data to be transmitted for changing the operation of at least one hoist, e.g. changing the at least one of the floor position and movement operations of a hoist car of the at least one hoist.

The local area network, e.g. the computer unit and/or database, may further be configured to retrieve additional data or information related to logistics from an external database, where the additional data or information related to logistics is not triggered by event identification/communication at the work site, i.e. not triggered by the scanning of a barcode or reading of at least one of an RFID tag, an NFC tag and a QR-code at the work site, but rather received from external devices and/or users, e.g. from a mobile communications unit located outside the work site area.

In embodiments, the technology disclosed relates to methods and a hoist system configured to at least one of receive data related to logistics events from a mobile communications device located outside the work site and receive and/or retrieve logistics event data from a logistics management system and, at least partly based on the received and/or retrieved at least one of sensor data and logistics event data, transmit control data for changing at least one of the floor position and movement operations of a hoist car of at least one hoist among a plurality of hoists at the work site. The logistics management system may comprise at least of an internal logistics management system located at the work site and an external logistics management system not located at the work site.

In certain embodiments, the logistics events database may be part of an Enterprise Resource Planning (ERP) system. The ERP may then provide an integrated and continuously updated view of the event identification/communication and logistics events that occur outside the work site by using e.g. common databases maintained by a database management system. In certain embodiments, the logistics event database may also be configured to provide an integrated and continuously updated view of the sensor data received or retrieved from the control units of the hoists, where the sensor data may first be received or retrieved by at least one of a computer unit of the local area network and a remotely located control and monitoring system.

In embodiments, the technology disclosed relates to methods for communicating with a control and monitoring system which is remotely located in relation to the work site. The remote control and monitoring system may then be configured to at least one of receive and retrieve data and/or information from the at least one local area network based on the received at least one of sensor data and logistics event data and, at least partly based on said received or retrieved data and/or information, transmit instruction data to the local area network with instructions for changing at least one of the floor position and movement operations of a hoist car of at least one hoist at the work site. By "remotely located in relation to the work site", it is meant in this disclosure that the control and monitoring system is not located at the work site whereas the local area network is located at the work site, e.g. a building or construction site.

In embodiments, the remotely located control and monitoring system is configured to feed-back the efficiency of the "battery" of hoists to the computer unit of the local area network, e.g. is there enough hoists, enough speed, enough capacity etc. The control data, or instruction data, generated and sent/transmitted by the computer unit of the local area network may at least partly be based on this feed-back information.

In embodiments, the remotely located control and monitoring system may be configured to generate and transmit control data to the control units of the hoist, where the control data is configured for changing at least one of the floor position and movement operations of a hoist car of at least one hoist among said plurality of hoists located at the work site. In certain aspects of this embodiment, the control data may be relayed from the internet to the control units of the hoists via the access point/node, e.g. a wireless access point/node, of the local area network located at the work site.

In embodiments, sensor data and/or logistics event data may be received or retrieved from the computer unit and/or database of the local area network and stored in an external database remotely located in relation to the local area network and communicatively connected to the remotely located control and monitoring system. The sensor data and/or logistics event data stored in the external database may then be retrieved from the external database by the remotely located control and monitoring system and used by the control and monitoring system in the generating of control data or instruction data to be transmitted for changing the operation of the hoist. In certain embodiments, the remotely located control and monitoring system is configured to perform at least one of processing, computations and optimization analyses at least partly based on the received or retrieved sensor data and/or logistics event data. In certain embodiments, the external database may be part of an Enterprise Resource Planning (ERP) system. The ERP may then provide an integrated and continuously updated view of the event identification/communication and logistics events that occur at the work site by using e.g. common databases maintained by a database management system. In certain embodiments, the external database may be configured to provide an integrated and continuously updated view of the sensor data received or retrieved from the control units of the hoists, where the sensor data is received or retrieved by a computer unit of the local area network and/or the remotely located control and monitoring system.

Additionally, the remotely located control and monitoring system may be configured to generate at least one of instruction data (to be transmitted to a computer unit of the local area network) and control data (to be transmitted to the control units of the hoists) for changing the operation of a hoist, where the generating of the instruction data and/or control data is at least partly based on the processing, computations and optimization analyses of the received sensor data and/or logistics event data. In embodiments, the instruction data and/or control data may be configured for changing at least one of the floor position and movement operations of a hoist car of at least one hoist among a plurality of hoists located at the work site, e.g. a building or construction site.

In certain embodiments, the remotely located control and monitoring system is a cloud-based computing system.

In certain embodiments, the hoist system further comprises a power supply module, a plurality of distributed monitoring units which are arranged in the intelligent hoists at the work site, a radio communication module, a cloud server, a monitoring centre, a network communication module and a remote control mobile terminal. The output of the power supply module is separately connected to power supply input ends of the plurality of distributed monitoring units, the plurality of distributed monitoring units are in bidirectional signal connection to the monitoring centre through the radio communication module, and the monitoring centre is in bidirectional signal connection to the cloud server through the radio communication module. The centralized monitoring system for a plurality of intelligent hoist at a work site based on artificial intelligence can achieve an effect of centralized monitoring and uniform management.

In certain specific embodiments of the technology disclosed, the plurality of hoists, or the plurality of sensors of a single hoist, may be configured for so called machine-to-machine communication. Machine to machine, commonly abbreviated as M2M, refers to direct communication between devices using any communications channel, including wired and wireless.

The machine to machine communication may then be configured for enabling a sensor or meter associated with at least one of the plurality of hoists to communicate the data it records such as temperature, vibrations, payload or speed to application software that may use it for adjusting the operations of a single or a plurality of hoists by transmitting control data. In embodiments, such M2M communication may accomplished by having a network of sensors relay information back to a central hub, that may be the access point of the local area network, for analysis, which would then be rerouted into the system. In embodiments, the technology disclosed may provide for wireless machine-to-machine communication between cage, landing & base, e.g. landing calls via RFID or Bluetooth.

### BRIEF DESCRIPTION OF DRAWINGS

Preferred embodiments of a hoist system and a local area network system, according to the technology disclosed will be described more in detail below with reference to the accompanying drawings wherein:
FIG. 1 illustrates an example hoist system and an example local area network system according to embodiments of the technology disclosed.
FIG. 2a shows a flow chart illustrating a method according to embodiments of the technology disclosed.
FIG. 2b shows a flow chart illustrating a method according to embodiments of the technology disclosed.
FIG. 2c shows a flow chart illustrating a method according to embodiments of the technology disclosed.

### DETAILED DESCRIPTION

In the drawings, similar details are denoted with the same reference number throughout the different embodiments. In the various embodiments of the hoist system and the local area network system, according to the technology disclosed the different subsystems are denoted. The "boxes"/subsystems shown in the drawings are by way of example only and can within the scope of the technology disclosed be arranged in any other way or combination.

In the drawings, similar details are denoted with the same reference number throughout the different embodiments.

As used herein, the term "logistics event" refers to the events and tasks to be performed to support or in accordance with a logistics process, where the logistics process is the flow of goods, material and/or people within the work site. In accordance with embodiments of the technology disclosed, a "logistics process" defines the order/sequence of logistics events/tasks and/or the timeline for the occurrence of the logistics events/tasks.

As used herein, the "event identification" triggering the "event communication", i.e. the transmission of logistics event data, may include at least one of the scanning or reading of a barcode, an RFID tag, an NFC tag and a QR-code, Bluetooth communication at the work site, or any other means of identification of the position of goods, material and/or people, and/or the identification of the occurrence, initiation or completion of a logistics task or event at the work site, for example the logistics tasks and/or events as defined by a logistics process determining the order of logistics events and/or the timeline for the flow of goods, material and/or people within the work site.

The term "logistics event data", for the purpose of this disclosure, is defined as data indicating that a logistics event has occurred and/or that a logistics task has been performed. In embodiments of the technology disclosed, the logistics event data may be transmitted/sent from a control unit or terminal located at the work site following the reading and/or scanning of a tag or barcode, where the reading or scanning of the tag or barcode may be indicator of a current position or geographical area for certain goods/material and/or people, may be indicating that a certain logistics event has occurred and/or that a certain logistics task has been initiated or completed, i.e. the transmission of logistics event data may then be a confirmation that a logistics event has occurred and/or that a logistics task has been initiated or completed. The control system or computer unit of the hoist system, e.g. a computer unit of a local area network, may then be configured to generate and transmit control data for changing operations of at least one hoist located at the work site, where the control data is at least partly based on the obtained logistics event data.

The term "sensor data" is in this disclosure defined as data related to the operations of at least one hoist at the work site. The sensor data is typically data measured or detected by a sensor or detector of at least one hoist located at the work site. In embodiments of the technology disclosed, sensor data is received or retrieved by the control system/computer unit of the hoist system such as a control unit/computer unit communicatively coupled to a local area network at the work site where the local area network is configured to receive sensor data and transmit control data for changing operations of at least one hoist located at the work site. In certain embodiments, the control data for operations of at least one hoist located at the work site is at least partly based on obtained sensor data and at least partly based on obtained logistics event data, where the logistics event data was first generated following the reading of a tag or the scanning of a barcode such as the automatic reading of an RFID tag or the scanning of a barcode by a mobile communications device or barcode scanner used by a worker at the work site. The automatic reading of an RFID tag or the scanning of a barcode by a mobile communications device or barcode scanner

In embodiments, the control system/computer unit of the hoist system may be further configured to dynamically change or update the logistics process determining the timeline and flow of goods and material at the work site. In embodiments, a change of the logistics process may be at least partly based on logistics event data received or retrieved by the control system/computer unit. In certain embodiments, the control system/computer unit, for example a computer unit of the local area network, may be configured to dynamically change a logistics process at least partly based on a combination of logistics event data and sensor data received or retrieved by the control system/computer unit.

According to certain embodiments of the technology disclosed, the control system may be configured to change the order/sequence of events and/or timeline of a current logistics process which is determining the flow of goods, material and/or people at the work site. In embodiments, the control system/computer unit may then be configured to dynamically change the logistics process at least partly based on the obtained logistics event data and then generate and transmit control data for changing operations of at least one hoist located at the work site, where the control data is at least partly based on the changed logistics process.

In other embodiments, the logistics event data is stored locally at a control unit located at the work site, e.g. a control unit comprised in one of the hoists, and the locally stored logistics event data is retrieved by the control system/computer unit such as a remotely-located control system or a computer unit of the local area network.

In embodiments, the logistics event data may be received by a computer unit of the local area network and control data at least partly based on the logistics event data may subsequently be received or retrieved by a computer unit of a remote control and monitoring system, where the remote control and monitoring system may be configured to dynamically change the logistics process at least partly based on the obtained control data/logistics event data. In certain embodiments, the remote control and monitoring system may be configured to transmit control data for controlling or changing operations of at least one hoist located at the work site, where the control data is generated and transmitted at least partly based on the received or retrieved logistics event data. The remote control and monitoring system may be further configured to transmit remotely-generated control data for controlling operations of at least one hoist to reflect a change of the logistics process where the change of the logistics process is at least partly based on the obtained logistics event data. In certain embodiments, the remotely generated control data may be received or retrieved by the local computer unit of the local area network which, in turn, is configured to transmit locally generated control data for changing operations of at least one hoist located at the work site, where the locally generated control data is at least partly based on the received or retrieved remotely generated control data.

The term "logistics event control unit" used in this disclosure may refer to a stationary control unit for reading or scanning a tag or barcode and which may be configured to transmit/send logistics event data to a control system such as a remotely-located control system or a computer unit of the local area network. In certain embodiments and applications of the technology disclosed, the logistics event data may be transmitted/sent by a mobile control unit or mobile terminal at the work site which is configured for reading or scanning a tag or barcode, where the mobile control unit or terminal may be a movable barcode scanner or mobile communications device such as a smartphone.

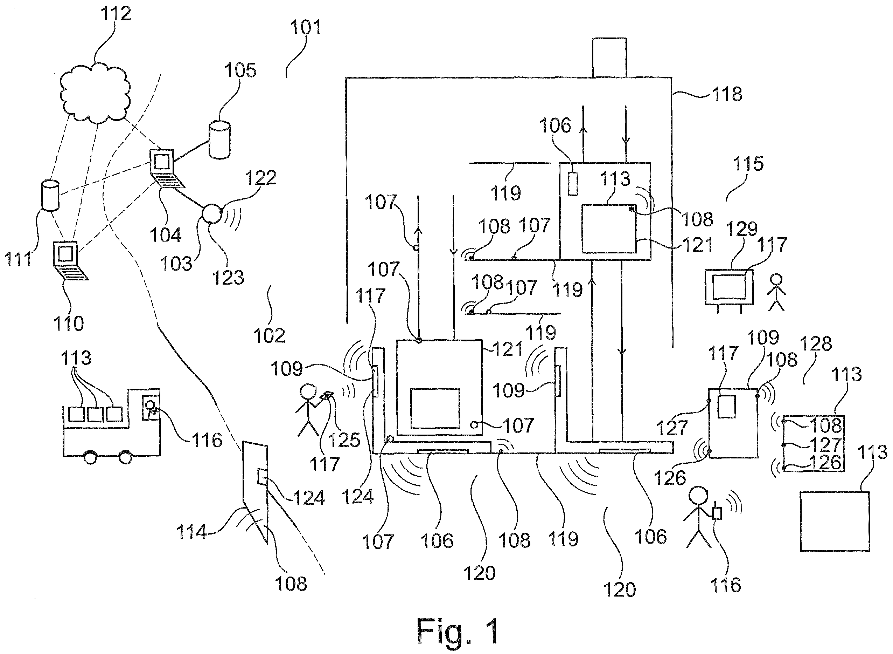

FIG. 1 illustrates a hoist system 101 and a local area network system 102 according to embodiments of the technology disclosed. In FIG. 1, the work site 115 a construction site comprising a building 118 having a plurality of floors 119 including ground level, first floor, second floor etc. The local area network system 102 is configured to receive sensor data and logistics event data, and, at least partly based on the received or retrieved at least one of sensor data and logistics event data, transmit control data for changing operations of at least one hoist 120 located at the work site.

The building material may be contained in e.g. boxes, containers or pallets 113 that arrive at the entrance gate 114 of the construction site 115. The entrance gate 114 comprises a barcode 124 and an RFID tag 108. Event communication is triggered by event identification such as the scanning of a barcode 124 at the entrance gate, e.g. by use of a barcode scanner 125 or mobile communications device 116, or the reading of the RFID tag 108 at the entrance gate 114, or any other identification of the position of goods, material and/or people, and/or the identification of the occurrence, initiation or completion of a logistics task or event at the work site. After entering the construction site area 115, the building material in the box, container or pallet 113 is temporarily stored in a storage area 128 of the construction site 115. The barcode scanner 125, or the mobile communications device 116, of a person located outside the entrance gate 114 may be used for event communication triggered by the event identification of scanning the barcode 124 at the entrance gate 114. The mobile communication device 116 of a person located outside the entrance gate 114 may be used for event communication triggered by the event identification of reading the RFID tag 108 at the entrance gate 144.

The storage area 128 may e.g. be an open space or a container and may comprise a logistics event control unit 109. The storage area 128 illustrated in FIG. 1 comprises a display screen 117, an RFID tag 108, an NFC tag 126 and a QR-code 127. A mobile communication device 116 of a worker at the construction site may be used for event communication triggered by event identification of reading e.g. the NFC tag 126 and the QR-code 127 of the logistics event control unit 109 at the storage area 128. The box, container or pallet containing the building material 113, and which is temporarily stored at the storage area 128, comprises an RFID tag 108, providing for event identification triggering the event communication in form of the transmission of logistics event data.

The local area network system 102 illustrated in FIG. 1 comprises a wireless access point 103, a computer unit 104 and an internal database 105. A wireless transmitter 122, which is comprised in or associated with the wireless access point 103 of the local area network, transmits control data to at least one of the control units 106, e.g. a sensor control unit 106, of the hoists 120. The transmitted control data is partly based on at least one of sensor data and logistics event data which is received by a wireless receiver 123 comprised in, or associated with, the wireless access point 103. The control data is transmitted by the wireless transmitter 122 of the wireless access point 103 with the purpose of changing the operations of at least one of the hoists 120, e.g. changing at least one of the floor position and movement operations of the hoist car 121 of the at least one hoist 120.

A sensor control unit 106 of the hoists 120 in FIG. 1 is configured for receiving sensor data from a plurality of sensors 107 of the hoists 120. The sensor control unit 106 of the hoist 120 is comprising a transmitter configured to wirelessly transmit the sensor data, or data based on the received or retrieved sensor data, to the wireless access point 103 of the local area network system 102. The plurality of sensors 107 illustrated in FIG. 1 include at least one of a temperature sensor, an accelerometer, a load cell or weight sensor for measuring the weight or payload of a hoist car, and an encoder configured for measuring at least one of distance and speed for a hoist car.

The hoist system 101 and local area network system 102 illustrated in FIG. 1 further comprises a plurality of logistics event control units 109 and the receiver 123 of the wireless access point 103 of the local area network system 102 is configured to wirelessly receive logistics event data from transmitters of the plurality of logistics event control units 109. The event communication in the form of transmission of the logistics event data from the logistics event control units 109 is triggered by event identification, where the event identification may include the scanning of a barcode 124, e.g. by the use of a barcode scanner 125 or a mobile communications device 116, and the reading of an RFID tag 108, an NFC tag 126 or a QR-code 127 at the construction site, or any other identification of the position of goods, material and/or people, and/or the identification of the occurrence, initiation or completion of a logistics task or event at the work site.

The computer unit 104 of the local area network system 102 is configured to improve or optimize the combined operations of the plurality of hoists 120 at the construction site 115 based wirelessly received sensor data and logistics event data. The computer unit 104 is also configured to generate control data based on the optimizing of the combined operations and transmit control data for changing operations of the plurality of hoist 120 at the construction site 115 in accordance with the optimization of the combined operations of the plurality of hoists 120.

The internal, or local, database 105 is communicatively connected to the computer unit 104 and is configured for storing the sensor data and logistics event data which was wirelessly received by the wireless access point 102 of the local area network system 102. The local database 105 is also configured to store information related to, or associated with, the received sensor data and logistics event data. The sensor data and logistics event data stored in the local database, and the stored information related to, or associated with, the received sensor data and logistics event data, is retrievable by the computer unit 104 and may be used in the generating of the control data to be transmitted for changing the operation of at least one hoist 120.

A remote control and monitoring system 110 is configured to receive and retrieve data and information from the computer unit 104 of the local area network system 102 based on at least one of received at least one of sensor data and logistics event data and/or knowledge or information about at least one of the different capacities and performances of a plurality of hoists 120 at the construction site 115. The remote control and monitoring system 110 is further configured to transmit instruction data to the computer unit 104 of the local area network 102 with instructions for changing at least one of the floor position and movement operations of a hoist car 121 of at least one of the hoists 120 at the construction site 115.

The remote control and monitoring system 110 in FIG. 1 is further communicatively coupled to an external logistics management system 112 and configured to receive and retrieve logistics event data from an external database 111 and the logistics management system 112. The local area network 102 is connected to the external database 111. The external database 111 is configured to store sensor data and logistics event data wirelessly received by the wireless access point 103 or the computer unit 104 of the local area network 102.

The logistics management system 112 illustrated in FIG. 1 is an Enterprise Resource Planning (ERP) system. The computer unit 104 of the local area network 102 is configured to receive and retrieve data and information related to logistics events from the logistics management system 112. The computer unit 104 is configured to generate control data for changing operations of at least one hoist 120 at the construction site 115 based on data and information related to logistics events and which is retrieved or received from the logistics management system 112.

The system illustrated in FIG. 1 may further comprise a plurality of display screens on which display content may be changed with the purpose of guiding the workers at the work site. The display screen may be comprised in a logistics event control unit 109, an information display unit 129, a mobile communications device 116, or a stationary and/or mobile barcode reader 125.

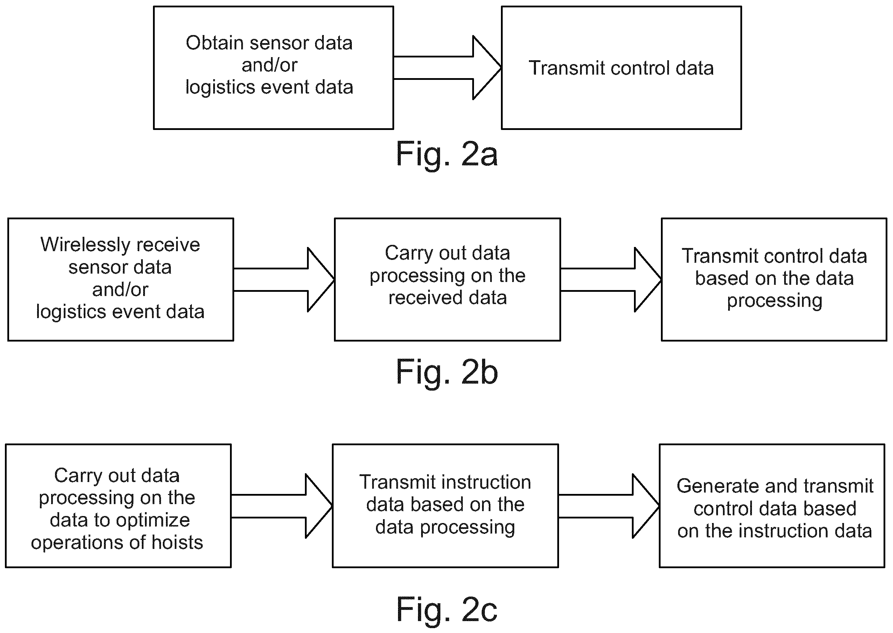

FIG. 2a shows a flow chart illustrating a first method according to embodiments of the technology disclosed. The method in FIG. 2a comprises the steps of obtain sensor data and/or logistics event data and transmit control data for changing operations of a hoist. The control data is based on the obtained sensor data and/or logistics event data.

FIG. 2b shows a flow chart illustrating a third method according to embodiments of the technology disclosed. The method in FIG. 2b comprises the steps of wirelessly receive sensor data and/or logistics event data (at the local area network system), carry out data processing (at the local area network system) on the received data (sensor data and/or logistics event data) and transmit control data (for changing operations of a hoist) based on the data processing.

FIG. 2c shows a flow chart illustrating a second method according to embodiments of the technology disclosed. The method in FIG. 2c comprises the steps of carry out data processing on data (sensor data and/or logistics event data) to optimize operations of a hoists by data processing, transmit and receive instruction data based on the data processing and generate and transmit control data based on the instruction data. The step of data processing and the transmission of instruction data may be performed by a remote system.

As mentioned above in the background part of this disclosure, the solutions known in the art includes elevator systems comprising a position determining device for determining the position of an elevator car within an elevator shaft and with respect to the running framework, which device comprises a marking unit for marking the position of the elevator car, and a detection unit for detecting or reading out the marking unit and an evaluation unit for evaluating measured values of the detection unit. The marking unit is formed as a carrier of a barcode and the detection unit is formed as an image sensor.

However, the solutions known in the art are not aimed at improving and optimizing the operations of hoists based on capacity, performance and operational data of the hoists and/or considering upcoming tasks to be performed at a work site.

The solutions known in the art are therefore not aimed at improving or optimizing the operations of a hoist and hoist car at a work site based on knowledge of the capacity, performance and operations of the hoists and/or events related to logistics events at the work site.

Particularly, the solutions known in the art are not aimed at improving or optimizing the combined operations of a plurality of hoists and hoist cars having different configurations based on knowledge of the capacity, performance and operations of the hoists at the work site and/or events related to logistics events.

An object of the present invention is to provide a system for improved and optimized automatic control of hoists such as rack and pinion hoists for building and industrial applications based on at least one of sensor data and logistics data received.

Another object of the present invention is to provide a hoist system, a local area network and methods that allows for automatic and better optimized control and operation of hoists for building and industrial applications at work sites. The technology disclosed proposes that the control and operation of hoist is optimized in that it is at least partly based on at least one of sensor data and logistics event data received from the control unit of the hoists and/or at least one logistics event control unit located at the work site. The control data received by the control units of the hoists may be used for changing the operation of the hoist, e.g. changing the floor position and movement operations of a hoist car which may include changing the direction of travel, retardations and stops at least partly based on at least one of sensor data and logistics event data.

A further object of the invention is to provide a hoist system, a local area network and methods for automatic and improved or optimized control of a plurality of hoists for building and industrial applications. The technology disclosed proposes that the combined control and operation of the plurality of hoists is improved or optimized in that it is at least partly based on at least one of sensor data and logistics event data which is received or retrieved from the control units of the plurality of hoists and/or at least one logistics event control unit located at the work site, e.g. a building or construction site.

The control data, which is received by the control units of the plurality hoists, may be used for optimizing or improving the combined operations of the plurality of hoists at a work site, e.g. changing the required payload, floor positions and movement operations, e.g. speed, for an individual hoist car among a plurality hoist cars of the plurality of hoists in an optimized or improved manner, which may include changing the direction of travel, retardations and stops of the plurality of hoist cars at least partly based on received or retrieved at least one of sensor data and logistics event data.

The above objects, as well as others, which will appear more closely from the description to follow, have been attained in that a hoist system of the kind comprises a local area network configured for receiving at least one of sensor data and logistics event data, and, at least partly based on the received at least one of sensor data and logistics event data, transmit control data for changing the operation of at least one hoist located at the work site.

The technology disclosed relates to a hoist system for operating at least one hoist located at a work site, wherein said hoist system comprises at least one local area network located at said work site, and wherein said at least one local area communications network is configured to receive or retrieve at least one of sensor data and logistics event data, and, at least partly based on said received or retrieved at least one of sensor data and logistics event data, transmit control data for changing operations of at least one hoist located at the work site.

The technology disclosed further relates to a local area network system for controlling the operations of a plurality of hoists at a work site, wherein said local area network system is configured to receive at least one of sensor data and logistics event data from the work site, and, at least partly based on received sensor data and/or logistics event data, transmit control data for changing the operation of at least one hoist at the work site.

In embodiments, the technology disclosed relates to a local area network system for controlling the operations of a plurality of hoists at a work site, wherein said local area network system is configured to receive both sensor data and logistics event data from the work site, and, at least partly based on both said received sensor data and said received logistics event data, transmit control data for changing the operation of at least one hoist at the work site.

The technology disclosed also relates to a method for controlling and monitoring operations of at least one hoist at a worksite, said method comprising:
a. obtaining, at the local area network system located at a work site, information related to at least one of sensor data and logistics event data associated with the at least one hoist at the work site; and
b. transmitting, from the local area network system, control data for changing operations of at least one hoist at the work site, wherein said control data is at least partly based on the received information related to the at least one of sensor data and logistics event data.

The technology disclosed relates to hoists, e.g. may relate to hoists which are provided with drive and control mechanisms. The technology disclosed may find particular utility in so-called construction hoists which are used to lift men and building material to the various floors of a building which is being constructed. Construction hoists typically include a tower structure which extends upwardly alongside the building and which is secured thereto, and a hoist car comprising cage or lift frame which travels upwardly along the tower.

The hoists of the technology disclosed include a hoist car, or cage, driven by means of a motor. The hoists may comprise a floor call system may be used for determining the direction of travel, retardations and stops based upon call and destination impulses, and considering the position of the hoist car, where the hoist car may typically contain a control and manoeuvre unit for the motor with a control and manoeuvre button set including floor call buttons. The hoists may typically further comprise landing-based call button units being connected to the control and manoeuvre unit via a ground level unit There may be call impulses for travel up and down, respectively, which are received from the respective push buttons of units on the landings. In the hoist car, destination impulses may typically be obtained from the destination buttons by counting impulses from a sensor device. There may be at least one destination button for each landing. When destination is carried through, this may be acknowledged in that a signal lamp included in a button in question is put on. Acknowledgement on the actual landing of a received call impulse for travel upwards may then be used. A lamp or the like may be kept on until the hoist car arrives at the landing for continued travel upwards. Acknowledgement on an actual landing of a call impulse for down travel may be received. A lamp/light emitting diode may be kept on until the lift arrives at the landing or continued travel down. Indications of the direction of travel of the hoist may also be used.

A signal indicating the current payload for a hoist may be received by the control unit of the hoist, e.g. a sensor control unit. This signal may be obtained from an inductive sensor. In case of overload, the hoist may be configured so that it is not be possible to start the lift. Due to acceleration forces the overload signal must momentarily be shunted as soon as the lift has started. In case of very near overload, i.e. if the lift car travels with nominal speed upwards, which is calculated based upon the teeth frequency, the control data from the computer unit of the local area network may be transmitted for changing the operations of the hoist car so that the hoist car does not stop to pick up more passengers or material, but travel to the nearest destination in order to get rid of the load soonest possible.

The hoist car may, in addition to the control data received from the computer unit of the local area network, be operated by means of push buttons on the landings and on the car roof directly to the operating contactors. Installation driving may be used during installation of the lift mast and in case of inspection/service.

In certain aspects, the technology disclosed may relate to, or be implemented in, rack and pinion hoists which include a hoist car which is driven via toothed wheels by means of an electromotor along a rack carried by a lift mast, where the hoist car may contain a control and manoeuvre unit for the electric motor with a control and manoeuvre button set including floor call buttons. The hoists may further comprise landing-based call button units being connected to the control and manoeuvre unit via a ground level unit from which also a power cable leads to the hoist car. In association with the hoist car, a sensor device may be arranged to indicate passage of teeth of the rack or the toothed wheel and produce corresponding position impulses, which represent the position of the hoist car. The number of teeth may be stored in certain registers where the number of teeth may correspond to the required stop distance at a landing. The length of the brake distance varies from case to case depending upon the direction of travel and the actual load. For the hoist car to stop exactly at the landing it is necessary that power to the drive motor is switched off and brake is switched on a certain number of teeth before the lift car arrives at the landing.

In the control system, automatic compression for the brake distance may therefore be included. Calculation of the length of the brake distance can be carried through either based upon the speed of the lift car for up or down travel, respectively, or a mean value of the length of the brake distances during the latest breakings during travel up and down, respectively.

A microcomputer system may be programmed and arranged to automatically update the actual values. The control of the movements of the hoist car may be carried through based upon information of its position. This information may be obtained in the form of position impulses from a sensor device in connection with the hoist car. In the case where the hoist is a rack and pinion hoist, the sensor device may be arranged to indicate passage of teeth of the rack carried by the lift mast or of a toothed wheel cooperating therewith.

The microcomputer system may include a programmable microcomputer unit, included in the sensor control unit and with a register for position impulse numbers from the sensor device, inputs for receiving call impulses for up and down travel, landing destination impulses, and outputs for controlling the operation of the electric motor.

The programmable micro computer unit may furthermore include a programming unit with an associated programming button set included in a control board. Furthermore, display means for landing indication and programming, may be connected to the programmable micro computer unit.

The hoist may further comprise a microcomputer system including a microcomputer unit which is fixed in the ground level unit The microcomputer unit in the ground level unit may be adapted to communicate with the call button units which may be provided with two pushbuttons, one for each direction of travel. The fixed microcomputer unit in the ground level unit may be arranged to scan the call button units in turn with respect to their state, i.e. if a call signal is present, and the direction thereof, and store such information. Identification of the respective landings is then carried through via thumb-wheel switches or similar means, which are simple and reliable and may be located in the push button box on the respective landing. When a call from a landing has been received it shall be acknowledged in that a signal lamp for the desired direction of travel is lighted on the landing in question.

In certain embodiments, the microcomputer system fixed in the ground level unit may be a sensor control unit configured for receiving or retrieving sensor data from a plurality of sensor devices in the hoist. According to embodiments of the technology disclosed, the sensor control unit fixed in the ground level unit is configured for receiving sensor data from at least one sensor of the hoist The sensor control unit in the ground level unit may then be configured to wirelessly transmit the sensor data, or data based on the received or retrieved sensor data, to the wireless access point of a local area network and the at least one sensor may then include at least one of a temperature sensor, an accelerometer, a load cell or weight sensor for measuring the weight or payload of a hoist car, and an encoder configured for measuring at least one of distance and speed for a hoist car. The sensor control unit in the ground level unit may then comprise a wireless transmitter configured to wirelessly transmit the sensor data, or data based on the received or retrieved sensor data, to the wireless access point.

In other embodiments, a microcomputer system in the hoist car may be a sensor control unit configured for receiving or retrieving sensor data from a plurality of sensor devices in the hoist. According to embodiments of the technology disclosed, the sensor control unit in the hoist car is configured for receiving sensor data from at least one sensor of the hoist In embodiments, the sensor control unit in the hoist car may then be configured to wirelessly transmit signals comprising sensor data, or data based on the received or retrieved sensor data, to the wireless access point of a local area network and the at least one sensor may then include at least one of a temperature sensor, an accelerometer, a load cell or weight sensor for measuring the weight or payload of a hoist car, and an encoder configured for measuring at least one of distance and speed for a hoist car.

In certain embodiments of the technology disclosed, the information stored in the fixed microcomputer unit may be transferred to a control and manoeuvre unit in the hoist car with its microcomputer unit. The communication between the microcomputer units may be carried through via a transmitter/receiver unit and by capacitive transmission with a loop via two phase conductors of the cable. Alternatively, inductive transmission can be used with a loop via ground cable and lift mast.

By using a power cable as a transmission means the need of a separate signal cable between the lift car computer and the ground level computer is eliminated, which provides an important simplification of the system and increases reliability. The transmission can, however, also, of course, be carried through via a separate two wire control cable, not shown. This can particularly come into question in lift installations of great height

The control board may include the above-mentioned display means. The display means may, for example, show by means of numbers the floor or landing on which the lift car is located.

In certain aspects, the proposed solutions of the technology disclosed may relate to or implemented be for, a rack and pinion hoist system, comprising a hoist car electro motor means for driving said car along a lift mast via rack and pinion means, a control unit in said car with a control button set including floor call buttons, call button units on landings along the mast, means connecting said call button units to said control unit via a ground level unit The hoist system may then be provided with a floor call system for automatic control of rack and pinion hoists for building and industrial applications. The floor call system shall determine the direction of travel, retardations and stops based upon call and destination impulses, and considering the position of the hoist car.

The present invention is providing a solution aimed at least one of optimizing and improving the operation of a hoist located at a work site such as a construction site. Particularly, the present invention provides a solution aimed at least one of optimizing and improving the combined operations of a plurality of hoists considering the different tasks to be performed at a work site. The combined operations of the plurality of hoists may be improved by optimizing the operations to at least one known or predicted upcoming task to be performed at the work site by providing a hoist system configured for collecting at least one of sensor data from the hoists and event data related to logistics events triggered by event identification/communication such as the scanning of a barcode and the reading of an RFID tag, NFC tag and a QR code at the work site, , or any other identification of the position of goods, material and/or people, and/or the identification of the occurrence, initiation or completion of a logistics task or event at the work site. The event communication may also include indications, or data related to logistics events, which is received or retrieved from proximity sensors, or Bluetooth communication such as the use of iBeacon technology.

In certain embodiments, the combined operations of a plurality of hoists may be improved or optimized by generating and transmitting control data for changing the operations of the plurality of hoists, e.g. by generating and transmitting control data for changing the movement operations of a plurality of hoist cars.

In certain embodiments, the combined operations of a plurality of hoists may be improved or optimized to one or a plurality of pre-known upcoming tasks to be performed at the work site by generating and transmitting control data for changing the operations of a plurality of hoists. The combined operations of the hoists may then be improved or optimized to the upcoming at least one task in that the generated control data is at least partly based on the pre-knowledge about at least one of the capacity, performance and operations of the hoists, the at least one upcoming task and/or at least partly based on both collected, e.g. received or retrieved, sensor data and collected event data related to logistics events triggered by event identification/communication such as the scanning of a barcode and the reading of an RFID tag, NFC tag and a QR code at the work site. The event identification/communication may also include indications, or data related to logistics events, which is received or retrieved from proximity sensors, or the use of iBeacon technology for obtaining data related to logistics events.

The technology disclosed relates to methods and a hoist system for operating a hoist located at a work site, where the hoist system comprises at least one local area network, e.g. a local area communications network, located at the work site. The technology disclosed further relates to a hoist system and a local area network configured for receiving at least one of sensor data and event data related to logistics events and, at least partly based on the received sensor data and/or logistics event data, transmitting control data for changing the operation of at least one hoist located at the work site.

In embodiments, the technology disclosed relates to a hoist system configured for transmitting logistics event data from the transmitter of a logistics event control unit to the local area network where the transmission of the logistics event data is triggered by event identification/communication, and where the event identification/communication may include at least one of the scanning of a barcode and the reading of at least one of an RFID tag, an NFC tag and a QR-code at the work site, or any other means of identification of the position of goods, material and/or people, and/or the identification of the occurrence, initiation or completion of a logistics task or event at the work site.

According to embodiments of the technology disclosed, a sensor control unit of the hoist is configured for receiving sensor data from at least one sensor of the hoist. The sensor control unit of the hoist may then comprise a transmitter configured for wirelessly transmitting the sensor data, or data based on the received or retrieved sensor data, to the wireless access point of a local area network and the at least one sensor may then include at least one of a temperature sensor, an accelerometer, a load cell or weight sensor for measuring the weight or payload of a hoist car, and an encoder configured for measuring at least one of distance and speed for a hoist car.

According to embodiments of the technology disclosed, a common sensor control unit communicatively coupled to a plurality of control units of a plurality of hoists may be configured to receive sensor data from a transmitter of the sensor plurality of control units, where each of the plurality of sensor control units comprises a transmitter configured for wirelessly transmitting sensor data to the wireless access point/node of the local area network. Each of the plurality of sensors control units is communicatively connected to and adapted for receiving sensor data from at least one sensor of the hoist The at least one sensor may then include at least one of a temperature sensor, an accelerometer, a load cell or weight sensor for measuring the weight or payload of a hoist car, and an encoder configured for measuring at least one of distance and speed for a hoist car.

The temperature sensors used in different embodiments of the technology disclosed may include sensors for detecting a temperature of the hoist motor and sensors for measuring temperature variations of control systems in electrical cabinets. The hoist motor may comprise electro motor means for driving the hoist car along a lift mast via rack and pinion means.

According to embodiments, control data transmitted downlink in the local area network for changing the operation of at least one hoist among a plurality of hoists located at the work site may be at least partly based on temperature data obtained from the temperature sensors which is sent uplink in the local area network. Additionally, the temperature data sent uplink may also be used for anticipating service needs for the hoists and/or accurately diagnosing operational problems with the hoist such as motor problems.

The accelerometers used may include accelerometers for determining g-forces, accelerometers for determining accelerations of the load induced by the operation of the hoist or by any bounce or oscillations of the load induced by the starting and stopping of the load, or accelerometers for monitoring vibrations in the hoist motors.

According to embodiments, control data transmitted downlink in the local area network for changing the operation of at least one hoist, among a plurality of hoists located at a work site, may be at least partly based on data obtained from at least one accelerometer which is sent uplink in the local area network. In addition, the accelerometer data sent uplink may be used for anticipating service needs for the hoists and/or accurately diagnosing operational problems with the hoist such as motor problems.

According to embodiments, control data transmitted downlink in the local area network for changing the operation of at least one hoist, among a plurality of hoists located at a work site, may be at least partly based on sensor data obtained from at least one load cells and/or weight sensor measuring the weight or payload of the hoist cage, where the data is sent uplink in the local area network. In addition, the load cell and/or weight sensor data sent uplink may be used for anticipating service needs for the hoists and/or accurately diagnosing operational problems.

According to embodiments, control data transmitted downlink in the local area network for changing the operation of at least one hoist, among a plurality of hoists located at a work site, may be at least partly based on sensor data obtained from at least one encoder configured for measuring distance and/or speed and where the data is sent uplink in the local area network. Additionally, the encoder data sent uplink may be used for anticipating service needs for the hoists and/or accurately diagnosing operational problems.

In different embodiments of the technology disclosed, control data transmitted downlink in the local area network for changing the operation of at least one hoist, among a plurality of hoists located at a work site, may be at least partly based on sensor data obtained both from at least one of a temperature sensor, an accelerometer, a load cell, a weight sensor and an encoder and logistics event data sent uplink, where the logistics event data is triggered by the scanning of a barcode or reading of a RFID-tag, NFC-tag a QR-code.

In certain embodiments of the technology disclosed, control data transmitted downlink in the local area network for changing the operation of at least one hoist, among a plurality of hoists located at a work site, may be at least partly based on sensor data obtained both from at least one of a temperature sensor, an accelerometer, a load cell, a weight sensor and an encoder and logistics event data sent uplink, where the logistics event data is triggered by the scanning of a barcode or reading of at least one of an RFID-tag, a NFC-tag a QR-code located at the work site.

In embodiments of the technology disclosed, control data transmitted downlink in the local area network for changing the operation of at least one hoist, among a plurality of hoists located at a work site, is at least partly based on both sensor data obtained both from at least one of a temperature sensor, an accelerometer, a load cell, a weight sensor and an encoder and logistics event data sent uplink, where the logistics event data is triggered by the scanning of a barcode or reading of at least one of an RFID-tag, a NFC-tag a QR-code associated with, or located at, one of the plurality of hoists at the work site.

In certain embodiments of the technology disclosed, control data transmitted downlink in the local area network for changing the operation of at least one hoist, among a plurality of hoists located at a work site, is at least partly based on both sensor data obtained both from at least one of a temperature sensor, an accelerometer, a load cell, a weight sensor and an encoder and logistics event data sent uplink, where the logistics event data is triggered by at least one of the scanning of a barcode or the reading of at least one of an RFID-tag, a NFC-tag a QR-code associated with, or located at, at least one of the plurality of hoists at the work site.

In certain embodiments of the technology disclosed, control data transmitted downlink in the local area network for changing the operation of at least one hoist, among a plurality of hoists located at a work site, is at least partly based on both sensor data obtained both from at least one of a temperature sensor, an accelerometer, a load cell, a weight sensor and an encoder of a plurality of hoists at the work site and logistics event data sent uplink, where the logistics event data is triggered by at least one of the scanning of a barcode or the reading of at least one of an RFID-tag, a NFC-tag a QR-code associated with, or located at, one of the plurality of hoists at the work site.

In certain embodiments of the technology disclosed, control data transmitted downlink in the local area network for changing the operation of at least one hoist, among a plurality of hoists located at a work site, is based on both lift event sensor data sent uplink which is based on sensor data obtained at a plurality of hoists at the work site and a plurality of transmissions of logistics event data. The logistics event data may then be triggered by a plurality of scanning and/or reading actions associated with a plurality of hoists, where the plurality of scanning and/or reading actions may include at least one of the scanning of a barcode and/or reading of at least one of an RFID-tag, a NFC-tag and a QR-code.

In certain embodiments of the technology disclosed, control data which is transmitted in the downlink of a local area network with the purpose of changing the operations of a plurality of hoists located at a work site, is based on both lift event sensor data obtained from a plurality of hoists at the work site and a plurality of transmissions of logistics event data sent uplink a plurality of hoists at the work site, where the logistics event data is triggered by a plurality of scanning and/or reading actions at the work site, and where the plurality of scanning and/or reading actions include at least one of the scanning of a barcode and/or reading of at least one of an RFID-tag, a NFC-tag a QR-code.

In embodiments, the control data transmitted downlink of a local area network for changing the operations of a plurality of hoists at the work site and which is based on both lift event sensor data and logistics event data, may be sent in a plurality of separate data transmissions received at the plurality of hoists. In embodiments, at least one of the downlink and the uplink may be the downlink/uplink channel of a Wireless Local Area Network (WLAN).

Radio-frequency identification (RFID) uses electromagnetic fields to automatically identify and track tags attached to objects. The tags contain electronically-stored information. Passive tags collect energy from a nearby RFID reader's interrogating radio waves. Active tags have a local power source, such as a battery, and may operate hundreds of meters from the RFID reader.

Unlike a barcode, the RFID-tag need not be within the line of sight of the reader, so it may be embedded in the tracked object RFID therefore offers advantages over manual systems or use of bar codes. The RFID-tag can be read if passed near a reader, even if it is covered by the object or not visible.

Near-field communication (NFC) is a set of communication protocols that enable two electronic devices, one of which is usually a portable device such as a mobile communications device, to establish communication by bringing them close to each, e.g. within 4 cm (1.6 in) of each other. NFC-equipped mobile communications device may be paired with NFC-tags or stickers that are programmed by NFC apps. These programs can allow a change of phone settings, texting, app launching, or command execution. Typically, such apps do not rely on a company or manufacturer but may be utilized immediately with an NFC-equipped mobile communications device and an NFC tag.

A barcode is an optical, machine-readable, representation of data. The data usually describes something about the object that carries the barcode. Traditional barcodes systematically represent data by varying the widths and spacings of parallel lines and may be referred to as linear or one-dimensional (1D). Later, two-dimensional (2D) variants were developed, using rectangles, dots, hexagons and other geometric patterns, called matrix codes or 2D barcodes, although they do not use bars as such. Initially, barcodes were only scanned by special optical scanners called barcode readers. Later application software became available for devices that could read images, such as mobile communications devices with cameras.

A barcode reader (or barcode scanner) is an electronic device that can read and output printed barcodes to a computer. Like a flatbed scanner, it consists of a light source, a lens and a light sensor translating optical impulses into electrical ones. Additionally, nearly all barcode readers contain decoder circuitry analysing the bar code's image data provided by the sensor and sending the barcode's content to the scanner's output port Hence, a barcode reader is an electronic device which is able to scan and decode barcodes. These devices may use optical technology such as infrared light. Some readers use an integrated decoder, others have one unit for reading the barcode, and another one to decode the barcode. A barcode reader, is a handheld or stationary input device used to capture and read information contained in a bar code. A barcode reader consists of a scanner, a decoder (either built-in or external), and a cable used to connect the reader with a computer. Because a barcode reader merely captures and translates the barcode into numbers and/or letters, the data must be sent to a computer so that a software application can make sense of the data. Barcode scanners can be connected to a computer through a serial port, keyboard port, or an interface device called a wedge. A barcode reader works by directing a beam of light across the bar code and measuring the amount of light that is reflected back.

Radio-frequency identification (RFID) uses electromagnetic fields to automatically identify and track tags attached to objects. The tags contain electronically-stored information. Passive tags collect energy from a nearby RFID reader's interrogating radio waves. Active tags have a local power source (such as a battery) and may operate hundreds of meters from the RFID reader. Unlike a barcode, the tag need not be within the line of sight of the reader, so it may be embedded in the tracked object RFID therefore offers advantages over manual systems or use of bar codes. The tag can be read if passed near a reader, even if it is covered by the object or not visible. The tag can be read inside a case, carton, box or other container, and unlike barcodes, RFID tags can be read hundreds at a time. Bar codes can only be read one at a time using current devices. An RFID Reader is a radio frequency transmitter and receiver that can read and write information to an RFID tag. RFID Readers can also be fixed or portable. Portable, or mobile, RFID readers can be installed or carried almost anywhere.

Signalling between the RFID reader and the RFID tag may be done in several different incompatible ways, depending on the frequency band used by the tag. Tags operating on LF and HF bands are, in terms of radio wavelength, very close to the reader antenna because they are only a small percentage of a wavelength away. In this near field region, the tag is closely coupled electrically with the transmitter in the reader. The tag can modulate the field produced by the reader by changing the electrical loading the tag represents. By switching between lower and higher relative loads, the tag produces a change that the reader can detect. At UHF and higher frequencies, the tag is more than one radio wavelength away from the reader, requiring a different approach. The tag can backscatter a signal. Active tags may contain functionally separated transmitters and receivers, and the tag need not respond on a frequency related to the reader's interrogation signal.

An Electronic Product Code (EPC) is one common type of data stored in a tag. When written into the tag by an RFID printer, the tag typically contains a 96-bit string of data. The first eight bits are a header which identifies the version of the protocol and the next 28 bits identify the organization that manages the data for this tag. The next 24 bits are an object class, identifying the kind of product. The last 36 bits are a unique serial number for a particular tag. These last two fields are set by the organization that issued the tag. Rather like a URL, the total electronic product code number can be used as a key into a database to uniquely identify a particular material, system or product

Besides RFID tags and sensors, other types of sensors presently exist for supplying information about a logistics event. For example, proximity sensors may detect the presence of nearby objects. In some situations, proximity sensors may be used as load sensors to detect whether a load has been applied to a surface, e.g., flatbed of a transport device. Motion sensors or accelerometers may detect movements of objects and additionally, directions of movements. Laser sensors may be used as range sensors to detect the distance from an object. These existing external sensors may provide independent information to help detect stray RFID readings.

The technology disclosed provides a hoist system and method using additional sensors from an external source, e.g., proximity sensors, to supplement RFID tag readings for a robust determination of target RFID tags, e.g. to be stored in a database. According to one example embodiment of the technology disclosed, a transport device, e.g., a forklift for moving building material in a construction area, may be equipped with an RFID scanner and external sensors, e.g., a proximity sensor for detecting a load on the forklift. The load information may then be combined with the RFID signal readings for a more accurate determination of target RFID tags. In one embodiment of the present invention, the load information of, e.g., whether a load has been loaded onto or off a forklift, may provide a time window within which the target RFID tag may be extracted. In another embodiment of the present invention, the motion information, e.g., the forklift's directional movements, may provide directional information which in combination with RFID signal strengths, may winnow down unwanted RFID tag readings.

Further, the present invention provides a method to represent a group of RFID tags on a carriage containing building material, e.g., a pallet with a "virtual" pallet RFID tag. After a determination that a group of RFID tags belong to a pallet, a virtual pallet RFID tag may be assigned to the group of tags and recorded in the RFID database. The virtual tag may be, e.g., the tag that was read the most number of times during a time window. This virtual pallet tag may be useful since an RFID tag attached to the pallet, i.e., the pallet tag, may not always be readable. The virtual pallet RFID may help locate a pallet when the pallet tag is not readable.

Often more than one tag will respond to a tag reader, for example, many individual products with tags may be shipped in a common box or on a common pallet. Collision detection is important to allow reading of data. Two different types of protocols are used to "singulate" a particular tag, allowing its data to be read in the midst of many similar tags. In a slotted system, the reader broadcasts an initialization command and a parameter that the tags individually use to pseudo-randomly delay their responses.

iBeacon technology may be used for event identification/communication according to the technology disclosed and is a technology based on Bluetooth low energy proximity sensing by transmitting a universally unique identifier picked up by a compatible app or operating system. The identifier and several bytes sent with it can be used to determine the device's physical location, track workers at the work site, or trigger a location-based action on the device such as a push notification. iBeacon can also be used with an application as a positioning system, which helps a mobile communications device determine its approximate location or context. With the help of an iBeacon, a mobile communications device's software can approximately find its relative location to an iBeacon at the work site, e.g. an iBeacon associated with a logistics event control unit at the work site.

In embodiments, examples of sensors used for measuring and/or detecting sensor data, which is sent uplink in the local area network, include temperature sensors, accelerometers, load cells or weight sensors for measuring the weight or payload of the hoist cage, and encoders configured for measuring distance and/or speed. Lift event sensor data based on the measured/detected sensor data may be sent or transmitted uplink of a local area network (LAN), such as a wireless LAN (WLAN)/Wi-Fi network or a radio-based network such as a 3G, 4G or 5G network, e.g. via an uplink channel of a radio-based network or WLAN.

The IEEE 802.11 WLAN standard has two basic modes of operation: infrastructure and ad hoc mode. In ad hoc mode, mobile units transmit directly peer-to-peer. In infrastructure mode, mobile units communicate through an access point that may also serve as a bridge to other networks such as Internet or LAN.

Most Wi-Fi networks are deployed in infrastructure mode. In infrastructure mode, a base station acts as a wireless access point hub, and nodes communicate through the hub. The hub usually, but not always, has a wired or fiber network connection, and may have permanent wireless connections to other nodes. Wireless access points are usually fixed and provide service to their client nodes within range. Wireless clients, such as laptops, mobile communications devices etc. connect to the access point to join the network. Sometimes a network will have a multiple access points, with the same 'SSID' and security arrangement In that case connecting to any access point on that network joins the client to the network. In that case, the client software will try to choose the access point to try to give the best service, such as the access point with the strongest signal.

In embodiments of the technology disclosed an ad hoc wireless network is used for obtaining the lift event sensor data and/or the logistics event data, An ad hoc wireless network, which is not the same as a WiFi Direct network is a network where stations communicate only peer to peer (P2P). There is no base and no one gives permission to talk. This may be accomplished using the Independent Basic Service Set (IBSS). A WiFi Direct network is another type of network where stations communicate peer to peer.

In a Wi-Fi P2P group, the group owner operates as an access point and all other devices are clients. There are two main methods to establish a group owner in the Wi-Fi Direct group. In one approach, the user sets up a P2P group owner manually. This method is also known as Autonomous Group Owner (autonomous GO). In the second method, also called negotiation-based group creation, two devices compete based on the group owner intent value. The device with higher intent value becomes a group owner and the second device becomes a client. Group owner intent value can depend on whether the wireless device performs a cross-connection between an infrastructure WLAN service and a P2P group, remaining power in the wireless device, whether the wireless device is already a group owner in another group and/or a received signal strength of the first wireless device.

A peer-to-peer network in embodiments of the technology disclosed may allow devices such as wireless devices to directly communicate with each other. Wireless devices within range of each other may then discover and communicate directly without involving central access points. This method is typically used by two devices so that they can connect to each other to form a network. This can basically occur in devices within a closed range.

A bridge can be used in embodiments of the technology disclosed to connect networks, typically of different types. A wireless Ethernet bridge may then allow the connection of devices on a wired Ethernet network to a wireless network. The bridge may then act as the connection point to the Wireless LAN.

A Wireless Distribution System (DS) in embodiments of the technology disclosed enables the wireless interconnection of access points in an IEEE 802.11 network. It may then allow a wireless network to be expanded using multiple access points without the need for a wired backbone to link them, as is traditionally required. The notable advantage of DS over other solutions is that it preserves the MAC addresses of client packets across links between access points.

An access point of a WLAN in embodiments of the technology disclosed may be either a main, relay or remote a local base station for radio communication. A main base station may then typically be connected to the wired Ethernet. A relay base station may relay data between remote base stations, wireless clients or other relay stations to either a main or another relay base station. A remote base station accepts connections from wireless clients and passes them to relay or main stations. Connections between "clients" are made using MAC addresses rather than by specifying IP assignments. All base stations in a Wireless Distribution System must be configured to use the same radio channel and share WEP keys or WPA keys if they are used. They can be configured to different service set identifiers. WDS also requires that every base station be configured to forward to others in the system as mentioned above. WDS may also be referred to as repeater mode because it appears to bridge and accept wireless clients at the same time (unlike traditional bridging). Throughput in this method is halved for all clients connected wirelessly. When it is difficult to connect all of the access points in a network by wires, it is also possible to put up access points as repeaters.

A wireless access point (WAP) is a hardware device or configured node on a local area network (LAN) that typically is configured to allow wireless capable devices and wired networks to connect through a wireless standard, including Wi-Fi, Bluetooth or radio-based 2G, 3G, 4G, or 5G standards for cellular mobile networks. WAPs feature radio transmitters and antennae, which may facilitate connectivity between devices and the Internet or a network. The wireless access point according to the technology disclosed may include a cellular wireless access point or radio base station, wireless access point, a Wi-Fi access point, or a femto-cell access point.

Cloud computing is shared pools of configurable computer system resources and higher-level services that can be rapidly provisioned with minimal management effort, often over the Internet. Cloud computing relies on sharing of resources to achieve coherence and economies of scale, similar to a public utility.

Third-party clouds enable organizations to focus on their core businesses instead of expending resources on computer infrastructure and maintenance. Advocates note that cloud computing allows companies to avoid or minimize up-front IT infrastructure costs. Proponents also claim that cloud computing allows enterprises to get their applications up and running faster, with improved manageability and less maintenance, and that it enables IT teams to more rapidly adjust resources to meet fluctuating and unpredictable demand.

Private cloud is cloud infrastructure operated solely for a single organization, whether managed internally or by a third party, and hosted either internally or externally. Undertaking a private cloud project requires significant engagement to virtualize the business environment and requires the organization to re-evaluate decisions about existing resources. It can improve business, but every step in the project raises security issues that must be addressed to prevent serious vulnerabilities. Self-run data centers are generally capital intensive. They have a significant physical footprint, requiring allocations of space, hardware, and environmental controls. These assets have to be refreshed periodically, resulting in additional capital expenditures.

A cloud is called a "public cloud" when the services are rendered over a network that is open for public use. Public cloud services may be free. Technically there may be little or no difference between public and private cloud architecture, however, security consideration may be substantially different for services (applications, storage, and other resources) that are made available by a service provider for a public audience and when communication is effected over a non-trusted network. Generally, public cloud service providers own and operate the infrastructure at their data center and access is generally via the Internet. Cloud service providers may also offer direct connect services, such connections require customers to purchase or lease a private connection to a peering point offered by the cloud provider.

Today, consumables typically have a barcode, such as screw, nails, plasterboard etc. The package number typically has a packing slip. Barcode scanners are made today manually, Jonny does not know if there are fully automated systems to scan barcodes on the market today. Most likely is that it is a WiFi network that is used as a wireless network but also radio connection 3G, 4G or 5G is conceivable. RFID tags are more common on saws, drills. The lift could become more of a storage room in the new solution, today, for example. RFID reading today is typically handled by a fixed stationary RFID reader.

In embodiments of the technology disclosed, the plurality of hoists, or the plurality of sensors of a single hoist, may be configured for so called machine-to-machine communication. Machine to machine, commonly abbreviated as M2M, refers to direct communication between devices using any communications channel, including wired and wireless. Machine to machine communication may include industrial instrumentation, enabling a sensor or meter associated with at least one of the plurality of hoists to communicate the data it records such as temperature, vibrations, payload or speed to application software that may use it for adjusting the operations of a single or a plurality of hoists by transmitting control data. In embodiments, such M2M communication may accomplished by having a network of sensors relay information back to a central hub, such as the access point of the local area network, for analysis, which would then be rerouted into the system. In embodiments, the technology disclosed may provide for wireless machine-to-machine communication between cage, landing & base, e.g. landing calls via RFID or Bluetooth.

## Claims

1. A hoist system for operating a plurality of hoists to support a logistics process at a work site, said hoist system comprises:
a. a control unit, or communication unit, configured to transmit a signal comprising logistics event data associated with at least one hoist at the work site and indicating at least one of the current position of at least one of goods, material and people and the occurrence, initiation or completion of a logistics task or event of a logistics process determining at least one of the flow of goods, material and people within the work site, wherein said control unit, or communication unit, is further configured to trigger the transmission of said signal comprising said logistics event data in response to event identification involving said control unit, or communication unit, and wherein said event identification includes the action or event of at least one of scanning or reading at least one of a barcode, an RFID tag, an NFC tag or a QR-code, or the action or event of detecting by a proximity sensor or via Bluetooth communication; and
b. at least one local area network located at said work site, wherein a control system, or computer unit, of said at least one local area network, or which is communicatively coupled to said local area network, is configured to receive said signal comprising said logistics event data, and, triggered by said received signal comprising said logistics event data, transmit a signal comprising control data to a control unit of the at least one hoist which operation is to be changed, wherein said transmitted control data is transmitted for instructing the change of operations of at least one hoist located at the work site, and wherein said change of operations includes at least one of changing the movement operations and floor position of the at least one hoist to support at least one of the next steps of said logistics process and the timeline and order of logistics tasks to be performed at the work site according to said logistics process,
wherein said hoist system is configured for operating a plurality of hoists at said work site in that said control system, or computer unit, is configured to receive sensor data from a plurality of hoists at said work site, and, based on a combination of received logistics event data and received sensor data measured or detected by a sensor or detector of a hoist located at the work site, transmit control data with instructions for changing operations of at least one hoist located at the work site including at least one of changing the movement operations and floor position of the at least one hoist,
wherein said control system, or computer unit, is further configured to transmit the control data triggered by a combination of sensor data received from at least one hoist and a plurality of transmissions of logistics event data received by said control system, or computer unit, and whose transmissions were triggered by a scanning and/or reading action associated with the plurality of hoists, and
wherein a control unit of the hoist which operation is to be changed is configured to receive said control data with instructions from said control system, or computer unit, and, based on the instructions received, transmit control data for changing the operation of at least one hoist at the work site including at least one of changing the movement operations and floor position of the at least one hoist

2. The hoist system according to claim 1, wherein said hoist system further comprises at least one sensor or detector and said at least one local area network is configured to wirelessly receive sensor data from a transmitter of said at least one sensor control unit, and wherein said sensor control unit is connected to and adapted for receiving sensor data from at least one sensor or detector of at least one hoist, and wherein said at least one sensor or detector include at least one of a temperature sensor, an accelerometer, a load cell or weight sensor for measuring the weight or payload of a hoist car, and an encoder configured for measuring at least one of distance and speed for a hoist car.

3. The hoist system according to any of the preceding claims, said hoist system comprises at least one of a barcode, an RFID tag, an NFC tag and a QR-code located at the work site, wherein said control system, or computer unit, of said at least one local area network is configured to transmit said control data for changing operations of said at least one hoist located at the work site at least partly based on both said received logistics event data and some pre-known knowledge about at least one of an upcoming logistics event and/or task at the work site, and wherein the hoist system is further configured so that the transmission of logistics event data from a mobile communications device or transmitter of a logistics event control unit located at the work site is adapted to be triggered by at least one of the scanning or reading of said at least one of a barcode, an RFID tag, an NFC tag and a QR-code at the work site.

4. The hoist system according to any of the preceding claims, wherein said logistics event data is transmitted in response to or following the reading or scanning of a tag or barcode and is transmitted with the purpose of indicating to the control system that a logistics event of a logistics process has occurred or that a task of the logistics process has been initiated or completed, and wherein said logistics process determines or defines the flow of goods, material and/or people within the work site.

5. The hoist system according to any of the preceding claims, wherein said control system or local area network is configured to change at least one of the timeline and/or order of events or tasks of a logistics process determining or defining the flow of goods, material and/or people within the work site, and wherein said change to the logistics process is at least partly based on logistics event data and/or sensor data obtained by the control system.

6. The local area network system according to any of the preceding claims, wherein said local area network system is further comprising a control system comprising a computer unit configured to at least one of
a. perform data processing for improving and/or optimizing the combined operations of a plurality of hoists at the work site at least partly based on the obtained logistics event data,
b. perform data processing for improving and/or optimizing the combined operations of a plurality of hoists at the work site at least partly based on knowledge about at least one of the different capacities and performances of a plurality of hoists at the work site, and
c. perform data processing for improving and/or optimizing the combined operations of a plurality of hoists at the work site at least partly based on the obtained logistics event data,
wherein the local area network system is further configured to transmit control data for changing the movement operations of at least one hoist among the plurality of hoists based on at least one of the obtained logistics event and said data processing.

7. A method for controlling operations of a plurality of hoists to support a logistics process at a worksite, said method comprising:
a. providing a logistics process which determines at least one of the order of logistics events and the timeline for the flow of at least one of goods, material and people within the work site;
b. conducting a plurality of event identifications by performing a plurality of scanning and/or reading actions associated with the plurality of hoists and including the scanning or reading at least one of a barcode, an RFID tag, an NFC tag or a QR-code, or by detecting, by a proximity sensor or via Bluetooth communication, wherein each of said event identifications involves a control unit or communication unit and each of the plurality of scanning and/or reading actions is triggering a transmission of logistics event data;
c. transmitting, from said control unit or communication unit via a local area network and in response to and triggered by said event identification, a plurality of signals each comprising logistics event data, wherein said logistics event data is indicating at least one of the current position of at least one of goods, material and people and the occurrence, initiation or completion of a logistics task or event of said logistics process;
d. receiving, by a control system or computer unit communicatively coupled to the local area network system, said plurality of signals each comprising logistics event data associated with at least one hoist at the work site;
e. receiving, by said control system or computer unit communicatively coupled to the local area network system, sensor data from at least one hoist at the work site, wherein said sensor data is data measured or detected by a sensor or detector of a hoist located at the work site; and
f. transmitting, from the control system or computer unit to a control unit of the at least one hoist which operation is to be changed, a signal comprising control data with instructions for changing operations of at least one hoist at the work site, wherein said transmission of said signal comprising said control data is triggered by a combination of said received sensor data and said received plurality of logistics event data whose transmission is triggered by a scanning or reading action, and wherein said control data for instructing the change of operations includes instructions for at least one of changing the movement operations and floor position of at least one hoist to support at least one of the next steps of said logistics process and the timeline and order of logistics tasks to be performed at the work site according to said logistics process;
g. receiving, by said control unit, said control data with instructions from said control system, or computer unit and, based on said instructions received:
h. transmit, by said control unit, further control data for changing the operation of at least one hoist at the work site including at least one of changing the movement operations and floor position of the at least one hoist

8. The method according to claim 7, wherein said receiving of said logistics event data and said sensor data includes at least one of wirelessly receiving sensor data from a sensor or detector of a hoist and wirelessly receiving logistics event data related to logistics events from a logistics event control unit or a mobile communications device located at the work site.

9. The method according to any of claims 7 and 8, wherein said logistics event data is transmitted from a logistics event control unit, a barcode scanner and/or a mobile communications device located at the work site, and wherein said transmission is triggered by at least one of the scanning of a barcode and reading of at least one of an RFID tag, an NFC tag and a QR-code at the work site.

10. The method according to any of claims 7 to 9, wherein said control data for changing operations of said at least one hoist located at the work site is at least partly based on both said received logistics event data and some pre-known knowledge about at least one of an upcoming logistics event and/or task at the work site.

11. The method according to any of claims 7 to 10, further comprising changing, by said control system or computer unit, at least one of the timeline and/or order of events or tasks of said logistics process determining the flow of goods, material and/or people within the work site, and wherein said change to the logistics process is at least partly based on at least one of logistics event data and sensor data received by the control system or computer unit.

12. The method according to any of claims 7 to 11, wherein said method further comprises:
processing, by said control system or computer unit, the obtained at least one of sensor data and logistics event data to control the combined operations of a plurality of hoists at the work site,
generating control data at least partly based on said processed at least one of sensor data and logistics event data, and
transmitting said control data for changing operations of at least one hoist among the plurality of hoist at least partly based on said processed at least one of sensor data and logistics event data.

## Patentansprüche

1. Hebesystem zum Betreiben einer Vielzahl von Hebezeugen zur Unterstützung eines Logistikprozesses an einer Arbeitsstelle, wobei das Hebesystem umfasst:
a. eine Steuereinheit oder eine Kommunikationseinheit, die so konfiguriert ist, dass sie ein Signal überträgt, das Logistikereignisdaten umfasst, die mit wenigstens einem Hebezeug an der Arbeitsstelle verbunden sind und wenigstens eines von der aktuellen Position von wenigstens einem von Waren, Material und Personen und dem Auftreten, der Einleitung oder dem Abschluss einer Logistikaufgabe oder eines Ereignisses eines Logistikprozesses anzeigen, das wenigstens eines von dem Waren-, Material- und Personenfluss innerhalb der Arbeitsstelle bestimmt, wobei die Steuereinheit oder die Kommunikationseinheit ferner so konfiguriert ist, dass sie die Übertragung des Signals auslöst, das die Logistikereignisdaten als Antwort auf Ereignisidentifikation umfasst, involvierend die Steuereinheit oder die Kommunikationseinheit, und wobei die Ereignisidentifikation die Aktion oder das Ereignis von wenigstens einem von Scannen oder Lesen wenigstens eines von einem Barcode, einem RFID-Tag, einem NFC-Tag oder einem QR-Code oder die Aktion oder das Ereignis von Erfassen durch einen Näherungssensor oder über Bluetooth-Kommunikation einschließt; und
b. wenigstens ein lokales Netzwerk, das sich an der Arbeitsstelle befindet, wobei ein Steuersystem oder eine Computereinheit des wenigstens einen lokalen Netzwerks, oder das kommunikativ mit dem lokalen Netzwerk gekoppelt ist, konfiguriert ist, um das Signal, das die Logistikereignisdaten umfasst, zu empfangen, und, ausgelöst durch das empfangene Signal, das die Logistikereignisdaten umfasst, ein Signal, das Steuerdaten umfasst, an eine Steuereinheit des wenigstens einen Hebezeugs, dessen Vorgang geändert werden soll, zu übertragen, wobei die übertragenen Steuerdaten übertragen werden, um die Änderung von Vorgängen von wenigstens einem Hebezeug, das sich an der Arbeitsstelle befindet, anzuweisen, und wobei die Änderung von Vorgängen wenigstens eines von Änderung der Bewegungsvorgänge und der Bodenposition des wenigstens einen Hebezeugs einschließt, um wenigstens einen der nächsten Schritte des Logistikprozesses und der Zeitlinie und die Reihenfolge der an der Arbeitsstelle durchzuführenden Logistikaufgaben gemäß dem Logistikprozess zu unterstützen,
wobei das Hebesystem zum Betreiben einer Vielzahl von Hebezeugen an der Arbeitsstelle konfiguriert ist, an der das Steuersystem oder die Computereinheit konfiguriert ist, um Sensordaten von einer Vielzahl von Hebezeugen an der Arbeitsstelle zu empfangen, und, auf der Grundlage einer Kombination von empfangenen Logistikereignisdaten und empfangenen Sensordaten, die von einem Sensor oder Detektor eines an der Arbeitsstelle befindlichen Hebezeugs gemessen oder erfasst werden, Steuerdaten mit Anweisungen zum Ändern von Vorgängen von wenigstens einem an der Arbeitsstelle befindlichen Hebezeug zu übertragen, einschließlich wenigstens eines von Änderung der Bewegungsvorgänge und der Bodenposition des wenigstens einen Hebezeugs,
wobei das Steuersystem oder die Computereinheit ferner konfiguriert ist, um die Steuerdaten zu übertragen, die durch eine Kombination von Sensordaten, die von wenigstens einem Hebezeug empfangen werden, und einer Vielzahl von Übertragungen von Logistikereignisdaten, die von dem Steuersystem oder der Computereinheit empfangen werden, ausgelöst werden, und deren Übertragungen durch eine Scan- und / oder Leseaktion ausgelöst wurden, die mit der Vielzahl von Hebezeugen verbunden ist, und
wobei eine Steuereinheit des Hebezeugs, dessen Vorgang geändert werden soll, so konfiguriert ist, dass sie die Steuerdaten mit Anweisungen von dem Steuersystem oder der Computereinheit empfängt, und, auf der Grundlage der empfangenen Anweisungen, Steuerdaten zum Ändern des Vorgangs von wenigstens einem Hebezeug an der Arbeitsstelle überträgt, einschließlich wenigstens eines von Änderung der Bewegungsvorgänge und der Bodenposition des wenigstens einen Hebezeugs

2. Hebesystem nach Anspruch 1, wobei das Hebesystem ferner wenigstens einen Sensor oder einen Detektor umfasst und das wenigstens eine lokale Netzwerk so konfiguriert ist, dass es Sensordaten von einem Übertrager der wenigstens einen Sensorsteuereinheit drahtlos empfängt, und wobei die Sensorsteuereinheit verbunden und angepasst ist zum Empfangen von Sensordaten von wenigstens einem Sensor oder Detektor von wenigstens einem Hebezeug, und wobei der wenigstens eine Sensor oder Detektor wenigstens eines von einem Temperatursensor, einem Beschleunigungsmesser, einer Wägezelle oder einem Gewichtssensor zum Messen des Gewichts oder der Nutzlast eines Hebewagen und einen Encoder, der zum Messen von wenigstens einem von Abstand und Geschwindigkeit für ein Hebewagen konfiguriert ist, einschließt.

3. Hebesystem nach einem der vorhergehenden Ansprüche, wobei das Hebesystem wenigstens eines von einem Barcode, einem RFID-Tag, einem NFC-Tag oder einem QR-Code umfasst, sich befindend an der Arbeitsstelle, wobei das Steuersystem oder die Computereinheit von wenigstens einem lokalen Netzwerk konfiguriert ist, um die Steuerdaten zum Ändern von Vorgängen des wenigstens einen Hebezeugs, das sich an der Arbeitsstelle befindet, wenigstens teilweise auf der Grundlage sowohl der empfangenen Logistikereignisdaten als auch einiger im Voraus bekannter Kenntnisse über wenigstens eines von einem bevorstehenden Logistikereignis und / oder einer Aufgabe an der Arbeitsstelle zu übertragen, und wobei das Hebesystem ferner so konfiguriert ist, dass die Übertragung von Logistikereignisdaten von einem mobilen Kommunikationsgerät oder Übertrager einer Logistikereignis-Steuereinheit, die sich an der Arbeitsstelle befindet, so angepasst ist, dass sie durch wenigstens eines von dem Scannen oder Lesen des wenigstens einen Barcodes, einen RFID-Tags, einen NFC-Tags und / oder einen QR-Codes an der Arbeitsstelle ausgelöst wird.

4. Hebesystem nach einem der vorhergehenden Ansprüche, wobei die Logistikereignisdaten als Antwort auf oder nach dem Lesen oder Scannen eines Tags oder Barcodes übertragen werden und mit dem Zweck übertragen werden, dem Steuersystem anzuzeigen, dass ein Logistikereignis eines Logistikprozesses aufgetreten ist oder dass eine Aufgabe des Logistikprozesses eingeleitet oder abgeschlossen wurde, und wobei der Logistikprozess den Waren-, Material- und / oder Personenfluss innerhalb der Arbeitsstelle bestimmt oder definiert.

5. Hebesystem nach einem der vorhergehenden Ansprüche, wobei das Steuersystem oder das lokale Netzwerk so konfiguriert ist, dass es wenigstens eines von der Zeitlinie und / oder der Reihenfolge von Ereignissen oder Aufgaben eines Logistikprozesses ändert, der den Waren-, Material- und / oder Personenfluss innerhalb der Arbeitsstelle bestimmt oder definiert, und wobei die Änderung des Logistikprozesses wenigstens teilweise auf Logistikereignisdaten und / oder Sensordaten basiert, die durch das Steuersystem erhalten werden.

6. Lokales Netzwerksystem nach einem der vorhergehenden Ansprüche, wobei das lokale Netzwerksystem ferner ein Steuersystem umfasst, das eine Computereinheit umfasst, die so konfiguriert ist, dass sie wenigstens eines von
a. Datenverarbeitung zur Verbesserung und / oder Optimierung der kombinierten Vorgänge einer Vielzahl von Hebezeugen an der Arbeitsstelle und wenigstens teilweise auf der Grundlage der erhaltenen Logistikereignisdaten ausführt,
b. Datenverarbeitung zur Verbesserung und / oder Optimierung der kombinierten Vorgänge einer Vielzahl von Hebezeugen an der Arbeitsstelle wenigstens teilweise auf der Grundlage von Kenntnissen über wenigstens eine der unterschiedlichen Kapazitäten und Leistungen einer Vielzahl von Hebezeugen an der Arbeitsstelle ausführt, und
c. Datenverarbeitung zum Verbessern und / oder Optimieren der kombinierten Vorgänge einer Vielzahl von Hebezeugen an der Arbeitsstelle wenigstens teilweise auf der Grundlage der erhaltenen Logistikereignisdaten ausführt,
wobei das lokale Netzwerksystem ferner so konfiguriert ist, dass es Steuerdaten zum Ändern der Bewegungsvorgänge wenigstens eines Hebezeugs unter der Vielzahl von Hebezeugen auf der Grundlage wenigstens eines der erhaltenen Logistikereignisse und der Datenverarbeitung überträgt.

7. Verfahren zur Steuerung von Vorgängen einer Vielzahl von Hebezeugen zur Unterstützung eines Logistikprozesses an einer Arbeitsstelle, wobei das Verfahren umfasst:
a. Bereitstellen eines Logistikprozesses, der wenigstens eines von der Reihenfolge der Logistikereignisse und die Zeitlinie für den Fluss von wenigstens einem von Waren, Material und Personen innerhalb der Arbeitsstelle bestimmt;
b. Durchführen einer Vielzahl von Ereignisidentifikation durch Ausführen einer Vielzahl von Scan- und / oder Leseaktionen, die mit der Vielzahl von Hebezeugen verbunden sind und das Scannen oder Lesen von wenigstens einem von einem Barcode, einem RFID-Tag, einem NFC-Tag oder einem QR-Code oder durch Erfassen durch einen Näherungssensor oder über Bluetooth-Kommunikation einschließen, wobei jede der Ereignisidentifikationen eine Steuereinheit oder eine Kommunikationseinheit einbezieht und jede der Vielzahl von Scan- und / oder Leseaktionen eine Übertragung von Logistikereignisdaten auslöst;
c. Übertragen einer Vielzahl von Signalen, wobei jedes Logistikereignisdaten umfasst, von der Steuereinheit oder der Kommunikationseinheit über ein lokales Netzwerk und als Antwort auf und ausgelöst durch die Ereignisidentifikation, wobei die Logistikereignisdaten wenigstens eines von der aktuellen Position von wenigstens einem von Waren, Material und Personen und das Auftreten, die Einleitung oder den Abschluss einer Logistikaufgabe oder eines Ereignisses des Logistikprozesses anzeigen;
d. Empfangen, durch ein Steuersystem oder eine Computereinheit, kommunikativ mit dem lokalen Netzwerksystem gekoppelt, der Vielzahl von Signalen, wobei jedes Logistikereignisdaten umfasst, die mit wenigstens einem Hebezeug an der Arbeitsstelle verbunden sind;
e. Empfangen von Sensordaten von wenigstens einem Hebezeug an der Arbeitsstelle durch das Steuersystem oder die Computereinheit, kommunikativ mit dem lokalen Netzwerksystem gekoppelt, wobei die Sensordaten Daten sind, die von einem Sensor oder Detektor eines Hebezeugs, das sich an der Arbeitsstelle befindet, gemessen oder erfasst werden; und
f. Übertragen eines Signals von dem Steuersystem oder der Computereinheit an eine Steuereinheit des wenigstens einen Hebezeugs, dessen Vorgang geändert werden soll, umfassend Steuerdaten mit Anweisungen zum Ändern von Vorgängen von wenigstens einem Hebezeug an der Arbeitsstelle, wobei die Übertragung des Signals, das die Steuerdaten umfasst, durch eine Kombination der empfangenen Sensordaten und der empfangenen Vielzahl von Logistikereignisdaten ausgelöst wird, deren Übertragung durch eine Scan- oder Leseaktion ausgelöst wird, und wobei die Steuerdaten zum Anweisen der Änderung von Vorgängen Anweisungen für wenigstens eine von Änderung der Bewegungsvorgänge und der Bodenposition wenigstens eines Hebezeugs einschließen, um wenigstens einen der nächsten Schritte des Logistikprozesses und die Zeitlinie und die Reihenfolge von Logistikaufgaben, die an der Arbeitsstelle gemäß dem Logistikprozess durchgeführt werden sollen, zu unterstützen;
g. Empfangen, durch die Steuereinheit, der Steuerdaten mit Anweisungen von dem Steuersystem oder der Computereinheit und, auf der Grundlage der empfangenen Anweisungen:
h. Übertragen weiterer Steuerdaten durch die Steuereinheit zum Ändern des Vorgangs von wenigstens einem Hebezeug an der Arbeitsstelle, einschließlich wenigstens einer Änderung der Bewegungsvorgänge und der Bodenposition des wenigstens einen Hebezeugs.

8. Verfahren nach Anspruch 7, wobei das Empfangen der Logistikereignisdaten und der Sensordaten wenigstens eines von drahtlosem Empfangen von Sensordaten von einem Sensor oder Detektor eines Hebezeugs und drahtlosem Empfangen von Logistikereignisdaten, die sich auf Logistikereignisse beziehen, von einer Logistikereignis-Steuereinheit oder einem mobilen Kommunikationsgerät, das sich an der Arbeitsstelle befindet, einschließt.

9. Verfahren nach einem der Ansprüche 7 und 8, wobei die Logistikereignisdaten von einer Logistikereignis-Steuereinheit, einem Barcode-Scanner und / oder einem mobilen Kommunikationsgerät, das sich an der Arbeitsstelle befindet, übertragen werden und wobei die Übertragung durch wenigstens eines von dem Scannen eines Barcodes und Lesen von wenigstens einem von einem RFID-Tag, einem NFC-Tag und einem QR-Code an der Arbeitsstelle ausgelöst wird.

10. Verfahren nach einem der Ansprüche 7 bis 9, wobei die Steuerdaten zum Ändern von Vorgängen des wenigstens einen sich an der Arbeitsstelle befindenden Hebezeugs wenigstens teilweise sowohl auf den empfangenen Logistikereignisdaten als auch auf einigen vorher bekannten Kenntnissen über wenigstens eines von einem bevorstehenden Logistikereignis und / oder einer bevorstehenden Aufgabe an der Arbeitsstelle basieren.

11. Verfahren nach einem der Ansprüche 7 bis 10, ferner umfassend Ändern wenigstens eines von der Zeitlinie und / oder der Reihenfolge von Ereignissen oder Aufgaben des Logistikprozesses, die den Fluss von Waren, Material und / oder Personen innerhalb der Arbeitsstelle bestimmen, durch das Steuersystem oder die Computereinheit, und wobei die Änderung des Logistikprozesses wenigstens teilweise auf wenigstens einem von Logistikereignisdaten und Sensordaten basiert, empfangen von dem Steuersystem oder der Computereinheit.

12. Verfahren nach einem der Ansprüche 7 bis 11, wobei das Verfahren ferner umfasst:
Verarbeiten der erhaltenen wenigstens einen Sensordaten und Logistikereignisdaten durch das Steuersystem oder die Computereinheit, um die kombinierten Vorgänge einer Vielzahl von Hebezeugen an der Arbeitsstelle zu steuern,
Erzeugen von Steuerdaten wenigstens teilweise auf der Grundlage von verarbeiteten wenigstens einen Sensordaten und Logistikereignisdaten, und
Übertragen der Steuerdaten zum Ändern von Vorgängen von wenigstens einem Hebezeug unter der Vielzahl von Hebezeug wenigstens teilweise auf der Grundlage der verarbeiteten wenigstens einen Sensordaten und Logistikereignisdaten.

## Revendications

1. Un système de levage pour faire fonctionner une pluralité de treuils pour accompagner un processus logistique sur un site de travail, ledit système de levage comprend :
a. une unité de commande, ou unité de communication, configurée pour transmettre un signal comprenant des données d'événement logistique associées à au moins un treuil sur le site de travail et indiquant au moins un parmi la position actuelle d'au moins un parmi des marchandises, des matériaux et des personnes et l'occurrence, le lancement ou l'achèvement d'une tâche logistique ou d'un événement d'un processus logistique déterminant au moins un des flux des marchandises, matériaux et personnes sur le site de travail, ladite unité de commande, ou unité de communication, étant en outre configurée pour déclencher la transmission dudit signal comprenant lesdites données d'événement logistique en réponse à une identification d'événement impliquant ladite unité de commande, ou unité de communication, et ladite identification d'événement comprenant l'action ou l'événement d'au moins l'un parmi le scannage ou la lecture d'au moins un parmi un code-barres, une étiquette RFID, une étiquette NFC ou un QR-code, ou l'action ou l'événement de détection par un capteur de proximité ou via une communication Bluetooth ; et
b. au moins un réseau local situé sur ledit site de travail, un système de commande, ou une unité informatique, dudit au moins un réseau local, ou qui est relié de façon communicante audit réseau local, étant configuré pour recevoir ledit signal comprenant lesdites données d'événement logistique, et, déclenché par ledit signal reçu comprenant lesdites données d'événement logistique, pour transmettre un signal comprenant des données de commande à une unité de commande dudit au moins un treuil dont le fonctionnement doit être modifié, lesdites données de commande transmises étant transmises pour ordonner le changement de fonctionnements d'au moins un treuil situé sur le site de travail, et ledit changement de fonctionnements comprenant au moins un parmi le changement de fonctionnements de déplacement et de position au sol dudit au moins un treuil pour prendre en charge au moins l'une des étapes suivantes dudit processus logistique et la chronologie et l'ordre de tâches logistiques à effectuer sur le site de travail en conformité avec ledit processus logistique,
ledit système de levage étant configuré pour faire fonctionner une pluralité de treuils sur ledit site de travail en ce que ledit système de commande, ou unité informatique, est configuré pour recevoir des données de capteur en provenance d'une pluralité de treuils sur ledit site de travail, et, sur la base d'une combinaison des données d'événement logistique reçues et des données de capteur reçues mesurées ou détectées par un capteur ou un détecteur d'un treuil situé sur le site de travail, pour transmettre des données de commande avec des instructions afin de modifier les fonctionnements d'au moins un treuil situé sur le site de travail, y compris au moins un parmi un changement des fonctionnements de déplacement et un changement des fonctionnements de position au sol dudit au moins un treuil,
ledit système de commande, ou unité informatique, est en outre configuré pour transmettre les données de commande déclenchées par une combinaison de données de capteur reçues en provenance d'au moins un treuil et une pluralité de transmissions de données d'événement logistique reçues par ledit système de commande, ou unité informatique, et dont les transmissions ont été déclenchées par un scan et/ou une action de lecture associée à la pluralité de treuils, et
une unité de commande du treuil dont le fonctionnement doit être modifié est configurée pour recevoir lesdites données de commande avec des instructions en provenance dudit système de commande, ou unité informatique, et, sur la base des instructions reçues, pour transmettre des données de commande afin de modifier le fonctionnement d'au moins un treuil sur le site de travail, y compris au moins un parmi le changement de fonctionnements de mouvement et le changement de fonctionnements de position au sol dudit au moins un treuil.

2. Le système de levage selon la revendication 1, ledit système de levage comprenant en outre au moins un capteur ou détecteur et ledit au moins un réseau local est configuré pour recevoir sans fil des données de capteur en provenance d'un émetteur de ladite au moins une unité de commande de capteur, et ladite unité de commande de capteur étant connectée à au moins un capteur ou détecteur d'au moins un treuil, et étant adaptée pour recevoir des données de capteur provenant de ce capteur ou détecteur, et ledit au moins un capteur ou détecteur comprenant au moins un parmi un capteur de température, un accéléromètre, une cellule de charge ou un capteur de poids pour mesurer le poids ou la charge utile d'une nacelle de treuil, et un encodeur configuré pour mesurer au moins une parmi une distance et une vitesse pour une nacelle de treuil.

3. Le système de levage selon l'une quelconque des revendications précédentes, ledit système de levage comprenant au moins un code-barres, une étiquette RFID, une étiquette NFC et un code QR situé sur le site de travail, ledit système de commande, ou unité informatique, dudit au moins un réseau local étant configuré pour transmettre lesdites données de commande de façon à modifier les fonctionnements dudit au moins un treuil situé sur le site de travail sur la base à la fois, au moins partiellement, desdites données d'événement logistique reçues et de connaissances préalables sur au moins un parmi un événement logistique à venir et/ou une tâche sur le site de travail, et le système de levage étant en outre configuré de sorte que la transmission de données d'événement logistique à partir d'un dispositif de communication mobile ou d'un émetteur d'une unité de commande d'événement logistique située sur le site de travail est adaptée pour être déclenchée par au moins un parmi le scannage ou la lecture dudit au moins un parmi un code-barres, une étiquette RFID, une étiquette NFC et un code QR sur le site de travail.

4. Le système de levage selon l'une quelconque des revendications précédentes, dans lequel lesdites données d'événement logistique sont transmises en réponse à la lecture ou le scannage d'une étiquette ou d'un code-barres, ou après cette lecture ou ce scannage, et sont transmises dans le but d'indiquer au système de commande qu'un événement logistique d'un processus logistique a eu lieu ou qu'une tâche du processus logistique a été lancée ou achevée, et dans lequel ledit processus logistique détermine ou définit le flux de marchandises, de matériaux et/ou de personnes à l'intérieur du site de travail.

5. Le système de levage selon l'une quelconque des revendications précédentes, dans lequel ledit système de commande ou réseau local est configuré pour modifier au moins un parmi la chronologie et/ou l'ordre des événements ou des tâches d'un processus logistique déterminant ou définissant le flux de marchandises, de matériaux et/ou de personnes à l'intérieur du site de travail, et ladite modification du processus logistique étant au moins partiellement basée sur des données d'événement logistique et/ou des données de capteur obtenues par le système de commande.

6. Le système de réseau local selon l'une quelconque des revendications précédentes, dans lequel ledit système de réseau local comprend en outre un système de commande comprenant une unité informatique configurée pour, au moins :
a. effectuer un traitement de données pour améliorer et/ou optimiser les fonctionnements combinés d'une pluralité de treuils sur le site de travail sur la base, au moins partiellement, des données d'événement logistique obtenues,
b. effectuer un traitement de données pour améliorer et/ou optimiser les fonctionnements combinés d'une pluralité de treuils sur le site de travail sur la base, au moins partiellement, de la connaissance d'au moins une parmi des différentes capacités et performances d'une pluralité de treuils sur le site de travail, et
c. effectuer un traitement de données pour améliorer et/ou optimiser les fonctionnements combinés d'une pluralité de treuils sur le site de travail sur la base, au moins partiellement, des données d'événement logistique obtenues,
le système de réseau local étant en outre configuré pour transmettre des données de commande pour modifier les fonctionnements de mouvement d'au moins un treuil parmi la pluralité de treuils sur la base d'au moins un des événements logistiques obtenus et dudit traitement de données.

7. Un procédé de commande des fonctionnements d'une pluralité de treuils pour accompagner un processus logistique sur un site de travail, ledit procédé comprenant :
a. le fait de fournir un processus logistique qui détermine au moins un parmi l'ordre des événements logistiques et la chronologie pour le flux d'au moins un parmi des marchandises, des matériaux et des personnes à l'intérieur du site de travail ;
b. le fait d'effectuer une pluralité d'identifications d'événements en effectuant une pluralité d'actions de scannage et/ou de lecture associées à la pluralité de treuils et comprenant le scannage ou la lecture d'au moins un parmi un code-barres, une étiquette RFID, une étiquette NFC ou un QR-code, ou par détection, par un capteur de proximité ou via une communication Bluetooth, chacune desdites identifications d'événement impliquant une unité de commande ou une unité de communication et chacune parmi la pluralité d'actions de scannage et/ou de lecture déclenchant une transmission de données d'événement logistique ;
c. le fait de transmettre, depuis ladite unité de commande ou unité de communication via un réseau local et en réponse à ladite identification d'événement, et déclenchée par celle-ci, une pluralité de signaux comprenant chacun des données d'événement logistique, lesdites données d'événement logistique indiquant au moins une parmi la position actuelle d'au moins un parmi les marchandises, les matériaux et les personnes et l'occurrence, le lancement ou l'achèvement d'une tâche ou d'un événement logistique dudit processus logistique ;
d. le fait de recevoir, par un système de commande ou une unité informatique reliée de façon communicante au système de réseau local, les signaux de ladite pluralité de signaux comprenant chacun des données d'événement logistique associées à au moins un treuil sur le site de travail ;
e. le fait de recevoir, par ledit système de commande ou unité informatique relié de façon communicante au système de réseau local, des données de capteur provenant d'au moins un treuil sur le site de travail, dans lequel lesdites données de capteur sont des données mesurées ou détectées par un capteur ou un détecteur d'un treuil situé sur le site de travail ; et
f. le fait de transmettre, depuis le système de commande ou l'unité informatique, à une unité de commande dudit au moins un treuil dont le fonctionnement doit être modifié, un signal comprenant des données de commande avec des instructions pour modifier les fonctionnements d'au moins un treuil sur le site de travail, ladite transmission dudit signal qui comprend lesdites données de commande étant déclenchée par une combinaison desdites données de capteur reçues et de ladite pluralité de données d'événement logistique reçues dont la transmission est déclenchée par une action de scannage ou de lecture, et lesdites données de commande pour ordonner le changement de fonctionnements comprenant des instructions pour au moins un des changements des fonctionnements de déplacement et de la position au sol d'au moins un treuil pour prendre en charge au moins une des étapes suivantes dudit processus logistique et la chronologie et l'ordre des tâches logistiques à effectuer sur le site de travail conformément audit processus logistique ;
g. le fait de recevoir, par ladite unité de commande, lesdites données de commande avec des instructions provenant dudit système de commande, ou unité informatique et, sur la base desdites instructions reçues :
h. le fait de transmettre, par ladite unité de commande, d'autres données de commande pour modifier le fonctionnement d'au moins un treuil sur le site de travail, y compris au moins une parmi la modification des fonctionnements de déplacement et la modification des fonctionnements de position au sol dudit au moins un treuil.

8. Le procédé selon la revendication 7, dans lequel ladite réception desdites données d'événement logistique et desdites données de capteur comprend au moins une parmi la réception sans fil de données de capteur en provenance d'un capteur ou d'un détecteur d'un treuil et la réception sans fil de données d'événement logistique liées à des événements logistiques en provenance d'une unité de commande d'événements logistiques ou d'un dispositif de communication mobile situé sur le site de travail.

9. Le procédé selon l'une quelconque des revendications 7 et 8, dans lequel lesdites données d'événement logistique sont transmises à partir d'une unité de commande d'événement logistique, d'un lecteur de code-barres et/ou d'un dispositif de communication mobile situé sur le site de travail, et dans lequel ladite transmission est déclenchée par au moins une parmi la lecture d'un code-barres et la lecture d'au moins une parmi une étiquette RFID, une étiquette NFC et un code QR sur le site de travail.

10. Le procédé selon l'une quelconque des revendications 7 à 9, dans lequel lesdites données de commande pour modifier les fonctionnements dudit au moins un treuil situé sur le site de travail sont au moins en partie basées à la fois sur lesdites données d'événement logistique reçues et sur certaines connaissances préalable concernant au moins un événement logistique à venir et/ou une tâche sur le site de travail.

11. Le procédé selon l'une quelconque des revendications 7 à 10, comprenant en outre le fait de modifier, par ledit système de commande ou unité informatique, au moins un parmi la chronologie et/ou l'ordre des événements ou des tâches dudit processus logistique déterminant le flux de marchandises, de matériaux et/ou de personnes sur le site de travail, ladite modification du processus logistique étant au moins partiellement basée sur au moins une parmi des données d'événement logistique et des données de capteur reçues par le système de commande ou l'unité informatique.

12. Le procédé selon l'une quelconque des revendications 7 à 11, dans lequel ledit procédé comprend en outre :
le fait de traiter, par ledit système de commande ou unité informatique, ladite au moins une, obtenue, parmi les données de capteur et les données d'événement logistique pour commander les fonctionnements combinés d'une pluralité de treuils sur le site de travail,
le fait de générer des données de commande au moins en partie sur la base de ladite au moins une, traitée, parmi les données de capteur et les données d'événement logistique, et
le fait de transmettre lesdites données de commande pour modifier les fonctionnements d'au moins un treuil parmi la pluralité de treuils au moins en partie sur la base de ladite au moins une, traitée, parmi les données de capteur et les données d'événement logistique.
